(19) Europäisches Patentamt
European Patent Office
Office européen des brevets

(11) EP 1 521 483 A1

(12) EUROPEAN PATENT APPLICATION

(43) Date of publication:
06.04.2005 Bulletin 2005/14

(51) Int Cl.⁷: H04N 13/00

(21) Application number: 04256061.5

(22) Date of filing: 30.09.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 30.09.2003 JP 2003342160

(71) Applicant: Kabushiki Kaisha Toshiba
Tokyo 105-8001 (JP)

(72) Inventors:
- Taira, Kazuki, IP Division Toshiba Corporation Minato-ku, Tokyo (JP)
- Hirayama, Yuzo, IP Division Toshiba Corporation Minato-ku, Tokyo (JP)
- Saishu, Tatsuo, IP Division Toshiba Corporation Minato-ku, Tokyo (JP)
- Fukushima, Rieko, IP Division Toshiba Corporation Minato-ku, Tokyo (JP)
- Yamauchi, Y., IP Division Toshiba Corporation Minato-ku, Tokyo (JP)
- Yanagawa, Shingo, IP Division Toshiba Corporation Minato-ku, Tokyo (JP)

(74) Representative: Midgley, Jonathan Lee
Marks & Clerk
90 Long Acre
London WC2E 9RA (GB)

# (54) Stereoscopic image producing method and stereoscopic image display device

(57) A stereoscopic image producing method can produce a stereoscopic image efficiently. The stereoscopic image producing method includes inputting a plurality of parallax images with pixel data including information pieces about the three primary colors, which are produced from different viewpoints, and, based upon information about arrangement of color pixel dots constituting a pixel of a display screen which displays a two-dimensional image thereon, composing some pieces of the three primary color information pieces in each of the parallax images and allocating the three primary color information pieces for different ones of the parallax images to the color pixel dots adjacent to each other in a screen horizontal direction on the display screen, where a stereoscopic image including a plurality of different parallax image information pieces in a horizontal direction in a space in which the stereoscopic image is displayed is produced.

104
Pi (0)
Pi (1)
Pi (2)
Pi (3)
Pi (4)
101
102
STEREOSCOPIC IMAGE PRODUCTION
103
105
106
Po
401
402
STEREOSCOPIC IMAGE DISPLAY
403

FIG. 4

EP 1 521 483 A1

## Description

### BACKGROUND OF THE INVENTION

#### Field of the Invention

The present invention relates to a stereoscopic image producing method and a stereoscopic image display device in a stereoscopic image display system of a multi-view point type where a stereoscopic image can be viewed without using an eyeglass.

#### Related Art

As a technique for displaying a stereoscopic image using an image display element which displays a two-dimensional image, a stereoscopic image display device of a multi-viewpoint type has been proposed (for example, refer to H. Hoshino, F. Okano, H. Isono and I. Yuyama "Analysis of resolution limitation of integral photography", J. Opt. Soc. Am, A15 (1998) 2059 - 2065). The stereoscopic image display device of a multi-viewpoint type is provided with an optical image selecting unit which synthesizes and display images from many view lines on an image display plane to cause a viewer to selectively view a corresponding image according to a viewpoint position of the viewer. The display technique is superior in view of a stereoscopic display system (autostereoscopy) which does not use an eyeglass. A principal that a corresponding image is selectively viewed according to a viewpoint of a viewer is based upon using a light beam direction restricting element comprising such a lens array as a slit array, a pin hole array or a cylindrical lens array, or a lenticular sheet as a unit that selects an image optically to restrict pixels which can be viewed from a viewpoint of a viewer. Geometrical dimensions of the light beam direction restricting element and the image display element and a relative position therebetween are set properly and unit information corresponding to a direction of a light beam emitted from each pixel in the image display element to pass through an aperture of the light beam direction restricting element is allocated to each pixel, so that a stereoscopic image including image information observed from a plurality of different viewpoints can be displayed. Here, an image obtained when a predetermined direction is observed from one viewpoint is defined as a "parallax image". It is considered that the above-described stereoscopic image includes a plurality of parallax images.

The stereoscopic image display method of the above system is an integral photography system or an integral imaging system called in view of its display principal. A multiview system is considered to be an integral photography display system including a special condition under which light beams are concentrated on a plurality of viewing positions of a viewer, the integral photography display system being technically included in the concept of the integral photography system. There are a case that the whole integral photography system is broadly defined as an autostereoscopic multiview system (without using glasses) in comparison with the binocular system including only information about two viewpoints obtained by both eyes of left and right and a case that the integral photography system and the multiview system are handled as systems different from each other. In this text, the multiview system is included in the integral photography system and is handled in the integral photography system in a lump.

A stereoscopic image in the integral photography system is constituted of a display image obtained by interleaving a plurality of parallax images for unit information to arrange them spatially in an orthographic manner. There are a case that the direction in which a plurality of parallax image information pieces are arranged in a parallel manner includes two directions of a horizontal direction on a screen and a vertical direction thereon and a case that the direction includes only a horizontal direction thereon. Since a system which applies a plurality of parallax image information pieces in two dimensional directions of a horizontal direction and a vertical direction is called "an integral photography system" in some cases, a system which applies a plurality of parallax image information pieces only in a horizontal direction on a screen may be especially discriminated as a one-dimensional integral photography system or the like.

Unit information pieces about viewpoint positions (view line directions) different for respective constituent units of a light beam direction restricting element are sequentially allocated to a stereoscopic image thus produced. An image constituted of viewpoint positions (view line directions) allocated to the respective constituent units of the light beam direction restricting element corresponding to one cycle is called "an elemental image". That is, the stereoscopic image constituted of a plurality of elemental images.

On the other hand, one pixel of an image display element which allows color display is constituted of pixel dots of the three primary colors of red (R), green (G) and blue (B) on the basis of a principle of an additive color mixing process. In each elemental image, when sets of unit information pieces allocated with parallax image information pieces are more closely arranged, image information pieces included in movement distance of a viewpoint, namely a unit view angle can be increased. Therefore, for improving display quality of a stereoscopic image, a method where, as a unit for parallax image information piece allocation, a pixel dot (color pixel dot) unit or a sub-pixel unit is used instead of the pixel unit has been proposed (for example, see Japanese Patent Application No. 2002-97048).

A direction of a light beam given by a relationship between the image display element and the light beam direction restricting element can be given arbitrarily principally. However, it is preferable in view of a stereoscopic image producing efficiency to set viewpoints discretely to allow concentration of light beams on the viewpoints (a multiview system in a narrow sense) or set light beam directions to parallel directions. The parallax image is suitable to use a perspective projected image in the former case or an orthographic projected image in the latter case in view of the relationship of the light beam directions. In a design where light beam directions are set to be parallel, a method where a more proper viewing zone is provided by changing sets of parallax images in an elemental image according to a display position on a screen has been proposed (for example, see Japanese Patent Application No. 2002-382389).

Since a stereoscopic image based upon a conventional system is produced by composing a plurality of parallax images, a time required for producing a stereoscopic image is made long principally. Alternatively, it is necessary to apply a parallel processing approach to such a stereoscopic image, which results in increase in image producing cost.

## SUMMARY OF THE INVENTION

In view of these circumstances, the present invention has been made, and an object thereof is to provide a stereoscopic image display device which can produce a stereoscopic image efficiently.

A stereoscopic image producing method according to a first aspect of the present invention includes: inputting a plurality of parallax images with pixel data including the three primary color information pieces, which are produced from different viewpoints; composing some pieces of the three primary color information pieces in each of the parallax images based upon information about arrangement of color pixel dots constituting a pixel of a display screen which displays a two-dimensional image thereon; and allocating the three primary color information pieces for different ones of the parallax images to the color pixel dots adjacent to each other in a screen horizontal direction on the display screen, wherein a stereoscopic image including a plurality of different parallax image information pieces in a horizontal direction in a space in which the stereoscopic image is displayed is produced.

A stereoscopic image producing method according to a second aspect of the present invention includes: inputting a plurality of parallax images with pixel data including the three primary color information pieces, which are produced from different viewpoints; allocating the three primary color information pieces in each of the parallax images to color pixel dots displaying corresponding color information pieces generally in a screen vertical direction of a display screen based upon information about arrangement of the color pixel dots constituting a pixel of the display screen which displays a two-dimensional image thereon; and allocating the three primary color information pieces for different ones of the parallax images to the color pixel dots adjacent to each other in a screen horizontal direction on the display screen, wherein a stereoscopic image including a plurality of different parallax image information pieces in a horizontal direction in a space in which the stereoscopic image is displayed is produced.

A stereoscopic image display device according to a third aspect of the present invention includes: an image display element on which a plurality of color pixel dots are arranged; a light beam direction restricting element which is disposed in front of or behind the image display element to restrict a direction of light beam which is emitted from the image display element or entered to the image display element; and an image display element driving unit which, based upon information about arrangement of the color pixel dots of the image display element, drives the image display element so as to compose some pieces of three primary color information pieces in a plurality of parallax images with pixel data including the three primary color information pieces, which are produced from different viewpoints, and allocate the three primary color information pieces for different ones of the parallax images to the color pixel dots adjacent to each other in a screen horizontal direction on the image display element to display a stereoscopic image including a plurality of different parallax image information pieces in a horizontal direction in a space in which the stereoscopic image is displayed is produced.

A stereoscopic image display device according to a fourth aspect of the present invention includes: an image display element on which a plurality of color pixel dots are arranged; a light beam direction restricting element which is disposed in front of or behind the image display element to restrict a direction of light beam which is emitted from the image display element or entered to the image display element; and an image display element driving unit which, based upon information about arrangement of the color pixel dots of the image display element, drives the image display element so as to allocate three primary color information pieces in a plurality of parallax images with pixel data including the three primary color information pieces, which are produced from different viewpoints, to the color pixel dots displaying corresponding color information piece generally in a screen vertical direction of the display screen and allocate the three primary color information pieces for different ones of the parallax images to the color pixel dots adjacent to each other in a screen horizontal direction on the image display element to display a stereoscopic image including a plurality of different parallax image information pieces in a horizontal direction in a space in which the stereoscopic image is displayed.

BRIEF DESCRIPTION OF THE DRAWINGS

Fig. 1 is a block diagram showing a constitution of a stereoscopic image producing method according to a first embodiment of the present invention;
Fig. 2 is a block diagram showing a constitution of a stereoscopic image producing method according to a second embodiment of the present invention;
Fig. 3 is a block diagram showing a constitution of a stereoscopic image producing method according to a third embodiment of the present invention;
Fig. 4 is a block diagram showing a constitution of a stereoscopic image producing method according to a fourth embodiment of the present invention;
Figs. 5A and 5B are diagrams for explaining an image format of a parallax image;
Fig. 6 is a flowchart showing a processing flow of a first example according to the present invention;
Fig. 7 is a diagram showing image information about a parallax image in the first example according to the present invention;
Fig. 8 is a diagram showing image information about a parallax image to be adopted in the first example according to the present invention;
Fig. 9 is a diagram showing a stereoscopic image mapped on an image display element in the first example according to the present invention;
Figs. 10A and 10B are flowcharts showing a processing flow in a second example according to the present invention;
Fig. 11 is a diagram showing image information about a parallax image in the second example according to the present invention;
Fig. 12 is a diagram showing an expanding method of the parallax image and the pixel information in the second example according to the present invention;
Fig. 13 is a diagram showing a stereoscopic image mapped on an image display element in the second example according to the present invention;
Figs. 14A and 14B are flowcharts showing a processing flow in a third example according to the present invention;
Fig. 15 is a diagram showing an expanding method of the parallax image and the pixel information in the third example according to the present invention;
Fig. 16 is a table showing a relationship among a reduction factor, an adoption factor and an interpolation factor of a parallax image in the first to third examples according to the present invention;
Fig. 17 is a graph showing a relationship between the number of parallax images (the number of parallaxes) and an adoption factor in the first to third examples according to the present invention;
Fig. 18 is a graph showing a relationship between the number of parallax images (the number of parallaxes) and an interpolation factor in the first to third examples according to the present invention;
Fig. 19 is a diagram for explaining a parameter of a camera;
Fig. 20 is a diagram for explaining a relationship between a camera arrangement and a photographed image in a multiview system;
Fig. 21 is a diagram for explaining a relationship between a conventional camera arrangement and a photographed image obtained in a multiview system;
Fig. 22 is a diagram for explaining a fifth example in the present invention;
Fig. 23 is a diagram for explaining a correspondence relationship among a photographed image, a parallax image and an elemental image in a multiview system;
Fig. 24 is a diagram for explaining a light beam distribution of an integral imaging comprising groups of parallel light beams;
Fig. 25 is a diagram for explaining a correspondence relationship among a photographed image, a parallax image and an elemental image in an integral imaging system comprising a group of parallel light beams;
Figs. 26A and 26B are diagrams for explaining a sixth example according to the present invention;
Fig. 27 is a diagram for explaining a correspondence between a parallax image number and a photographed image number in an integral imaging comprising groups of parallel light beams;
Fig. 28 is a diagram showing a range of a optimized viewing zone in the integral imaging comprising groups of parallel light beams;
Fig. 29 is a diagram for explaining a seventh example in the present invention;
Fig. 30 is a perspective view showing a constitution of a stereoscopic image display device;
Figs. 31A to 31E are side views showing constitution examples of a stereoscopic image display device;
Fig. 32 is a diagram for explaining a vertical stripe arrangement in an image display element;

Fig. 33 is a diagram for explaining a horizontal stripe arrangement in an image display element;
Fig. 34 is a diagram for explaining a stripe arrangement and a mosaic color pixel dot arrangement in an image display element;
Fig. 35 is a diagram for explaining a delta arrangement in an image display element;
Figs. 36A to 36C are diagrams for explaining a delta arrangement and a mosaic color pixel dot arrangement in an image display element;
Fig. 37 is a diagram showing a display principle of a stereoscopic image display device of a multiview system in a constitution where a slit is provided on a front face of an image display element;
Figs. 38A and 38B are diagrams showing a display principle of a stereoscopic image display device of a multiview system in a constitution where a lenticular sheet is provided on a front face of an image display element;
Fig. 39 is a diagram showing a display principle of a stereoscopic image display device of a multiview system in a constitution where a slit is provided on a rear face of an image display element;
Fig. 40 is a diagram for explaining a correspondence relationship between an elemental image and a viewing condition when a slit is used for a light beam restricting element;
Fig. 41 is a diagram showing a correspondence relationship between an elemental image and a viewing condition when a lenticular sheet is used for a light beam restricting element;
Fig. 42 is a diagram showing a relationship among a stripe arrangement, an arrangement of a slit having a linear aperture and a parallax image number;
Fig. 43 is a diagram showing a relationship among a stripe arrangement, an arrangement of a slit having a step-like aperture and a parallax image number;
Figs. 44A(a) to 44A(c) are diagrams showing an example of an arrangement including 1/2 pitch shift of color pixel dots in a vertical direction on a screen, and Figs. 44B(a) to 44B(c) are diagrams showing an example of an arrangement including 1/2 pitch shift of color pixel dot in a vertical direction on a screen; and
Figs. 45A and 45B are diagrams showing another example of an arrangement including 1/2 pitch shift of color pixel dots in a vertical direction on a screen.

## DETAILED DESCRIPTION OF THE INVENTION

Prior to explanation of embodiments of the present invention, first, relationships among respective constituent elements relating to a stereoscopic image producing method and a stereoscopic image display device of the present invention will be explained in detail referring to a plurality of examples. (Fundamental constitution and principle of a stereoscopic image display device)

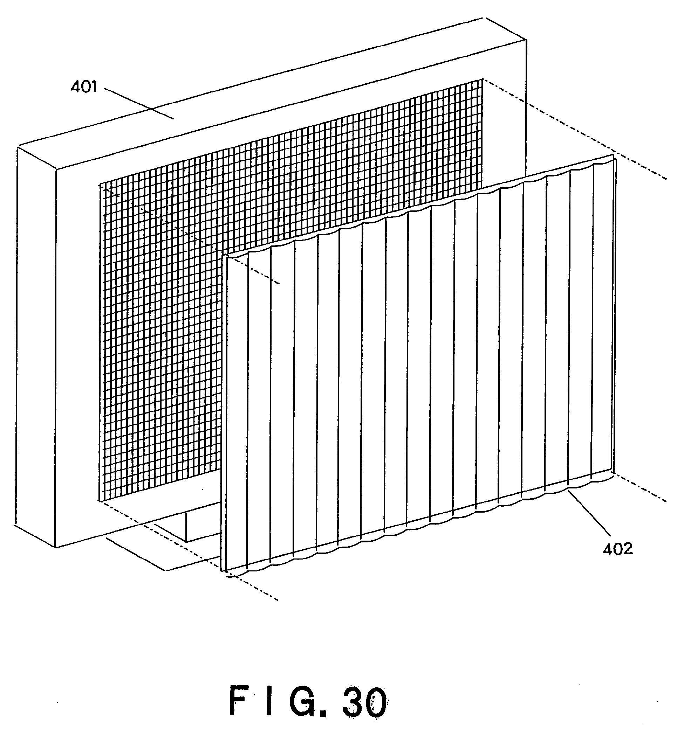

Fig. 30 is a perspective view showing a basis constitution of a stereoscopic image display device relating to the present invention. This constitution is provided with a plurality of color pixel dots arranged in a two-dimensional plane shape, and it includes an image display element 401 which allows display of a color image and a light beam direction restricting element 402 which restricts light beams emitted from the color pixel dots to restrict a visible angle in a horizontal direction.

Regarding the image display element 401, since positional deviations of color pixel dots on a screen thereof largely influence emitting directions of light beams, a display device where pixel dots are arranged in a matrix shape in a two-dimensional manner, namely a so-called flat panel display device is preferred to a CRT device or a projector as the image display element of the stereoscopic image display device. Such display elements includes a liquid crystal panel (LCD) of a non-luminous type, a plasma display panel (PDP) and an organic EL (electroluminescence) panel of a luminous type, and the like. A lenticular sheet having a chief line extending in a vertical direction on a screen or a slit array can be used as the light beam direction restricting element 402. As described later, since the light beam direction restricting element is provided for restricting a light beam direction to a screen horizontal direction, a chief line of a cylindrical lens or a slit aperture on the lenticular sheet is not required to have a continuously linear shape over the entire face of the screen vertically (in a column direction) necessarily, and it may be formed of one line or an intermittent line comprising several line sections in a column direction such that the chief line or the slit aperture is suitable for color pixel dot arrangement.

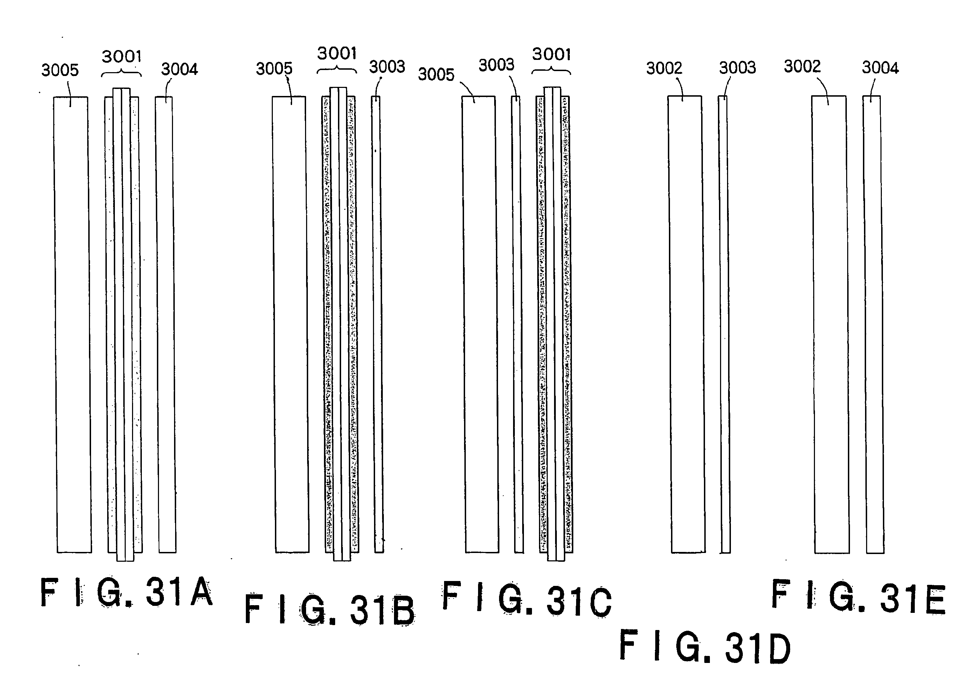

Figs. 31A to 31E are side views showing a front to rear relationship of the image display element and the light beam direction restricting element. Figs. 31A to 31C show examples where a LCD 3001 of a non-luminous type is used as the image display element. The non-luminous type LCD 3001 is provided on its rear face with a back light 3005. An example where a lenticular sheet 3004 is disposed on a front face of the LCD 3001 as the light beam direction restricting element is shown in Fig. 31A, an example where the slit array 3003 is disposed on a front face of the LCD 3001 as the light beam direction restricting element is shown in Fig. 31B, and an example where a slit array is disposed between the back light 3005 and the LCD 3001 as the light beam direction restricting element is shown in Fig. 31C. Figs. 31D to 31E shows examples where the image display element is a flat panel of a self-luminous type 3002, an example where a slit array 3003 is disposed on a front face of the self-luminous type flat panel 3002 being shown in Fig. 31D and an example where the lenticular sheet 3004 is provided on a front face thereof being shown in Fig. 31E.

Except for the structure shown in Fig. 31C, when the non-luminous type LCD 3001 is regarded in the same light with the self-luminous type flat panel by considering the non-luminous type LCD 3001 and the back light 3005 as an integral unit, rough classification can be made into the structures shown in Figs. 31B and 31D where the slit array 3003 is provided on the front face of the image display element and the structures shown in Figs. 31A and 31E where the lenticular sheet 3004 is provided on the front face of the image display element.

(Multiview system)

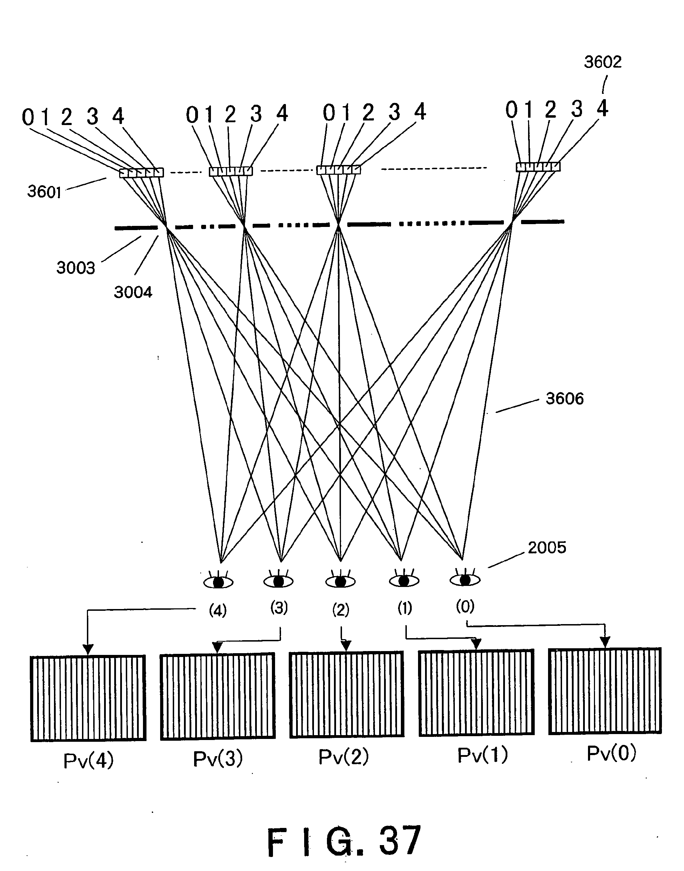

A principle where a stereoscopic image is displayed in the stereoscopic image display device with the above structure is shown in Fig. 37. Fig. 37 is a top view of a stereoscopic image display device of a multiview type (five views) where the structure shown in Fig. 31B or 31D which is provided with the slit array 3003 on a front face of an image display element 401 is used and five viewpoints 2005 are provided. For simplification, it is assumed that color pixel dots 3601 is formed in a stripe arrangement (the stripe arrangement will be described later). Since the color pixel dots 3601 are observed through apertures 3004 of the slit array 3003 provided on a front face thereof, a direction in which each color pixel dot can be viewed or observed is limited to a very narrow range such as indicated with light beams 3606. As apparent from Fig. 37, such a condition can be set by setting a pitch of the apertures 3004 of the slit array 3003 and a distance between the slit array 3003 and the color pixel dots 3601 properly that light beams 3606 emitted from the color pixel dots 3601 are concentrated on the viewpoints 2005 of a viewer for each several pixel dots (five dots in this example). Therefore, by displaying five kinds of images indicated by parallax image numbers 0 to 4 on respective color pixel dots, the viewer can view corresponding images Pv(0) to Pv(4) at the viewpoints 2005. That is, the viewer can view a stereoscopic image by providing a proper parallax between parallax images and arranging the right eye and the left eye of the viewer at different viewpoints 2005. Incidentally, reference numeral 3602 denotes a generic name of the parallax image numbers.

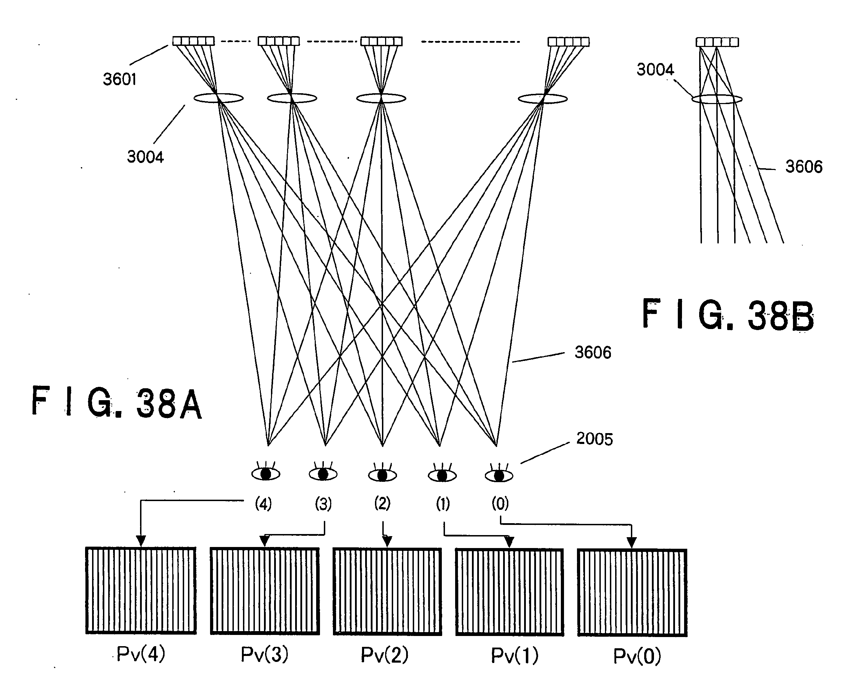

An example where the lenticular sheet 3004 is used and a constitution similar to that shown in Fig. 37 is employed is shown in Figs. 38A and 38B. In Figs. 38A and 38B, a lenticular sheet is schematically shown as an assembly of single lenses for explaining a principle. As shown in Fig. 38B, by setting focal points of the lenticular sheet 3004 on color pixel dots 3601, light beams 3606 emitted from the color pixel dots 3601 are emitted as parallel lights, so that light beam directions can be restricted like the case that the slit array is provided.

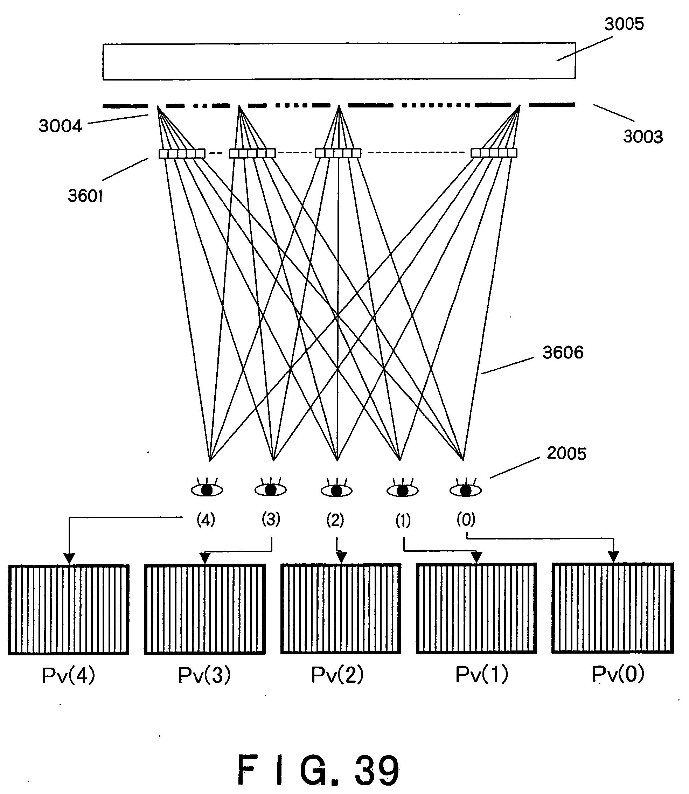

Fig. 39 shows an example where the slit array 3003 is disposed behind the color pixel dots 3601. A similar stereoscopic image display device can be constituted by restricting illumination lights from a back light 3005 at apertures 3004 of the slit array 3003 angularly and illuminating the color pixel dots 3601 under a predetermined condition.

(Integral imaging)

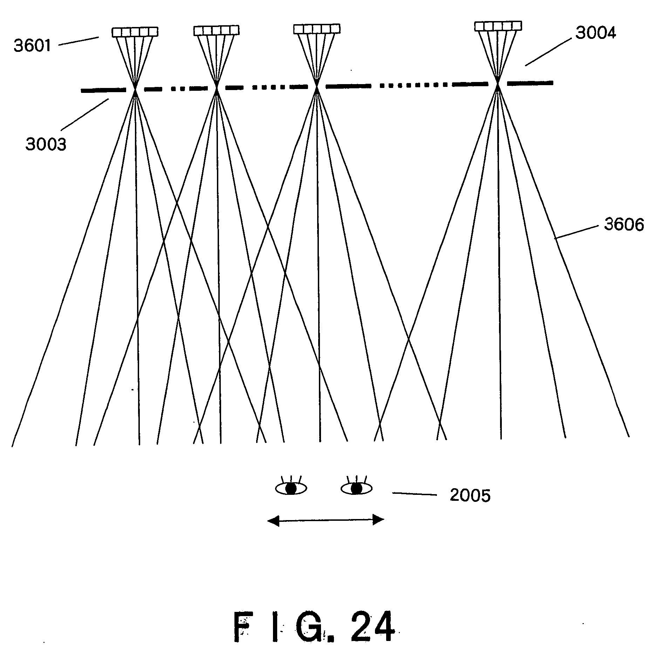

In the multiview systems described above, such a design is employed that light beams are converged on the viewpoint, but a stereoscopic image can be displayed without especially converging light beams on the viewpoint position, which is generally called "an integral photography system" or "an integral imaging system". In this case, there is not any condition to be defined especially regarding a light beam direction, but it is practically efficient in production of a parallax image that the parallax image is constituted of a group of parallel light beams where the pitch of the light beam direction restricting element is integer times the pitch of the color pixel dots, i.e., is equal to the pitch of the set of color pixel dots. Such an example is shown in Fig. 24. In this example, since an image is displayed as a collection of groups of light beams incident on any viewpoint position, a parallax image does not correspond one-to-one with an image to be viewed. That is, one portions of a plurality of parallax images are synthesized so that a viewer recognizes one parallax image.

(As regards arrangement of color pixel dots in image display element)

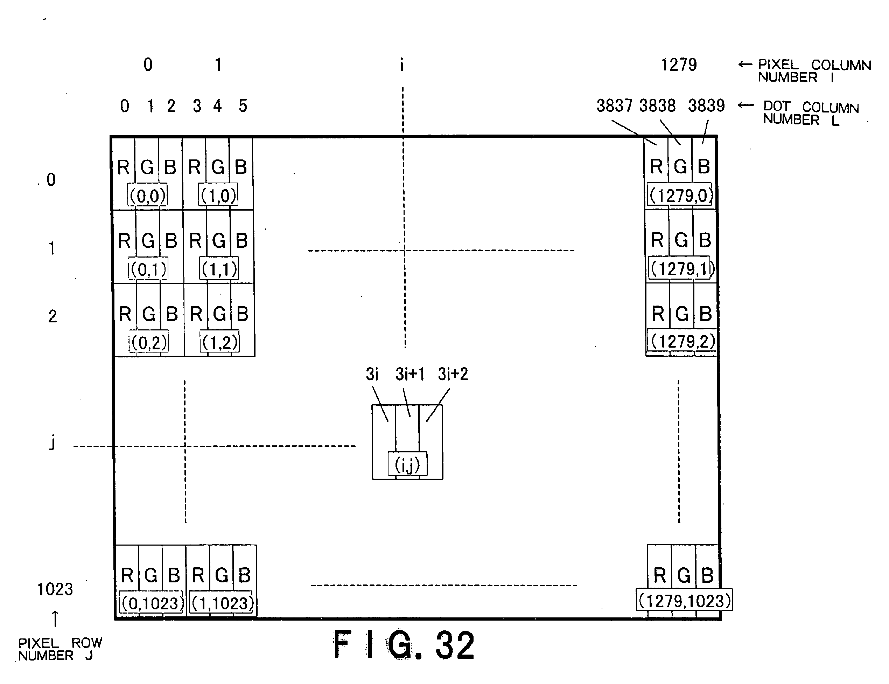

Information about arrangement of color pixel dots in an image display element 401 are defined with a shape of each pixel and how to arrange color pixel dots. The pixel generally has such a size that an aspect ratio of the color pixel dot (a size ratio of a horizontal direction and a vertical direction) is set to 1: 3 and color pixel dots of three colors of RGB are arranged in a horizontal direction as one pixel. An arrangement obtained by arranging pixels thus constituted in a grid shape is called "a stripe arrangement". Here, unless the order of colors of the color pixel dots are re-arranged, the color pixel dots are arranged in the order of R, G, B, R, G, B... in a row direction (in a horizontal direction) of the image display element, and color pixel dots with the same color are arranged in a column direction (in a vertical direction). This arrangement is a vertical stripe arrangement most popular as information about a color pixel dot arrangement of an image display element. An example of the vertical stripe arrangement is shown in Fig. 32.

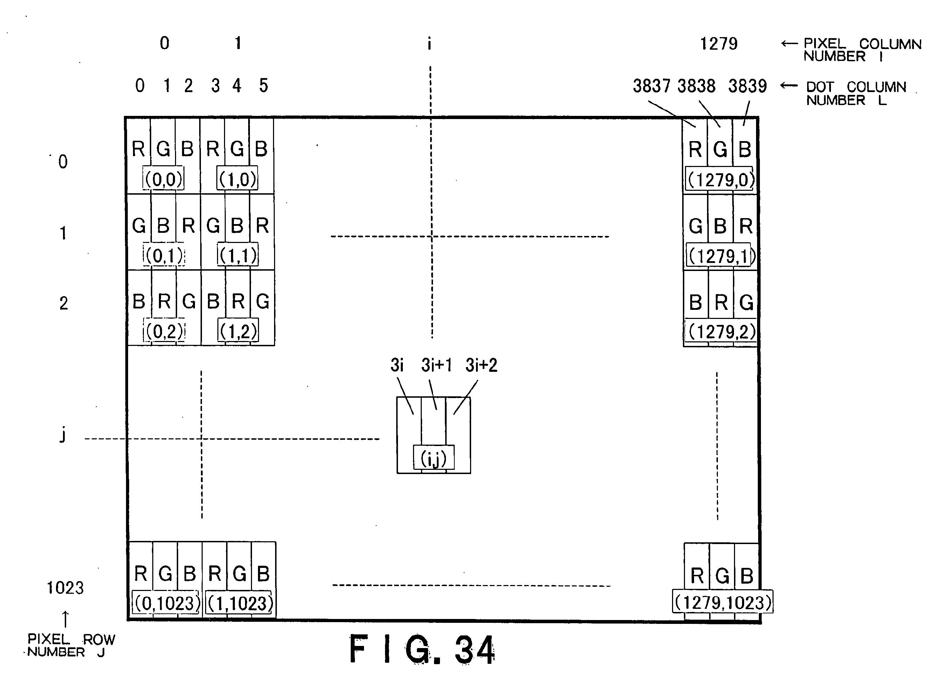

In the stripe arrangement, such a constitution can be employed that color arrangement of color pixel dots in the row direction (in the horizontal direction) is set in the same manner as the vertical stripe arrangement, colors different between color pixel dots adjacent to each other in the row direction are arranged, and a set of the three primary colors of R, G and B are obtained in the set of color pixel dots included in one row and three columns (a mosaic arrangement). An example of the mosaic arrangement is shown in Fig. 34.

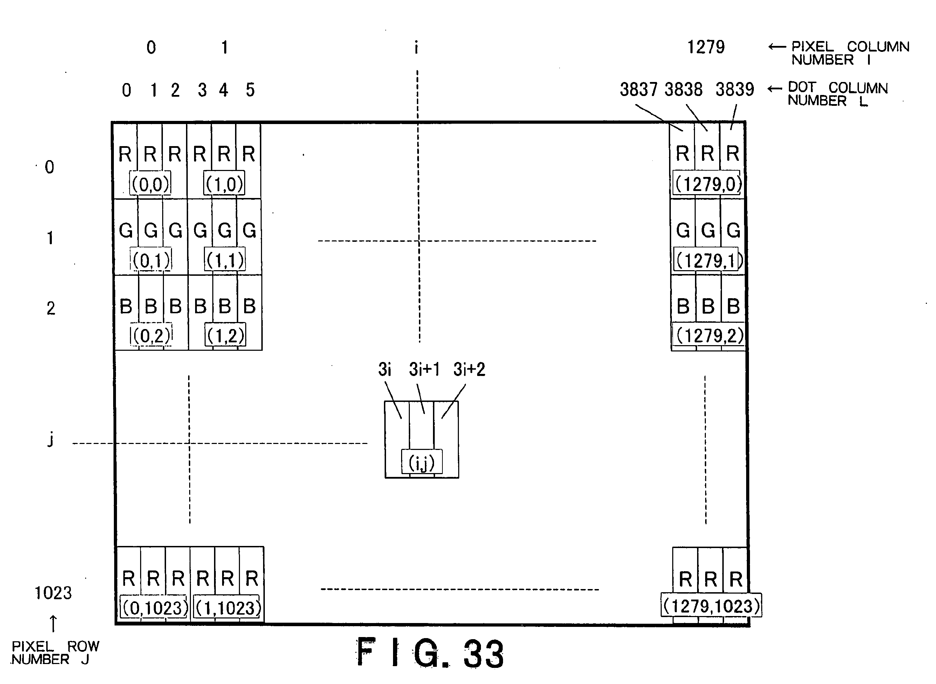

Such a constitution can be employed that color pixel dots with the same color are arranged in one row using a set of color pixel dots included in three rows and one column as one pixel (a horizontal or lateral stripe arrangement). When the aspect ratio or the size ratio is set to 1: 3, one pixel does not form a regular square, but a dot pitch in the row direction can be set more finely, so that parallax images can be arranged densely. That is, since emitted light beams can be made dense, such a constitution, or the horizontal strip arrangement is suitable for an image display element for a stereoscopic image display device. An example of the horizontal stripe arrangement is shown in Fig. 33.

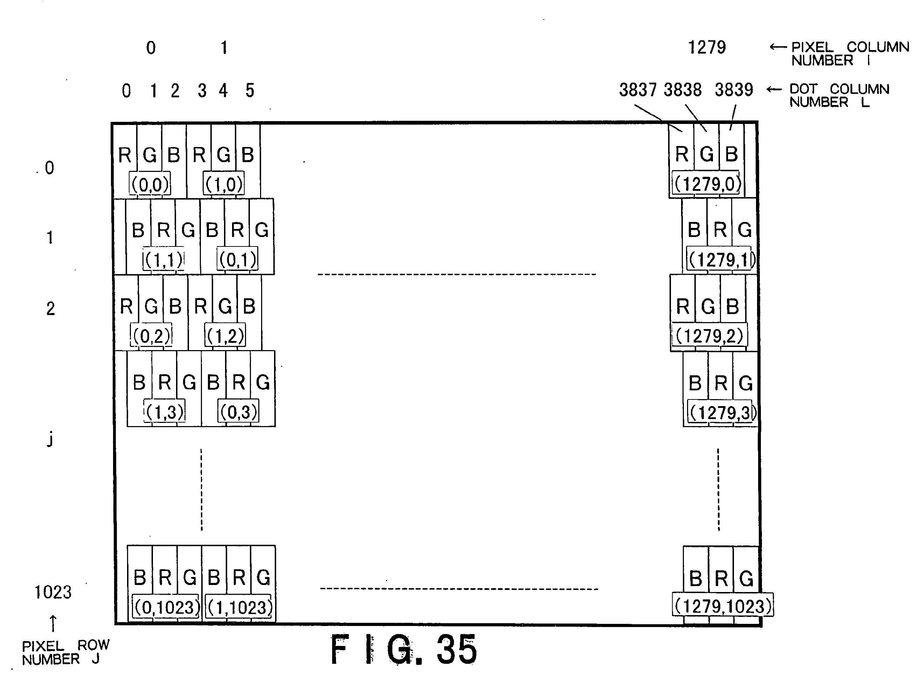

Further, an arrangement that a pixel arrangement in a row direction has been shifted in a range of a pitch of color pixel dots or less in a horizontal direction can be employed. An arrangement where 1/2 pitch shift is applied to the pitch of pixel dots is called "a delta arrangement". An example of the delta arrangement is shown in Fig. 35. In general, a color pixel dot with a square is frequency used in the delta arrangement. As described above, however, the example of the size ratio of 1:3 is shown, because color pixel dots must be arranged more densely in the horizontal direction than in the vertical direction.

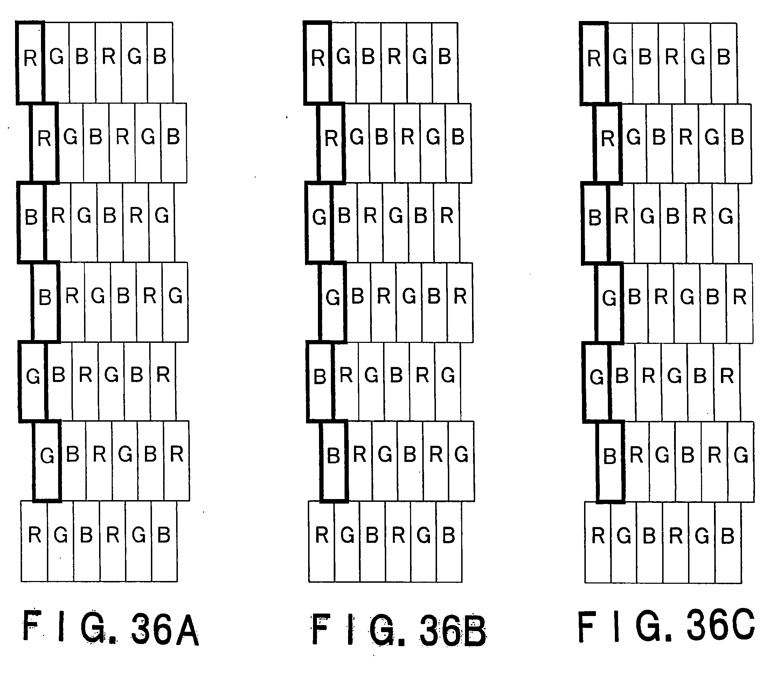

In the above example, color pixel dots with the same color are arranged in the vertical direction on the screen in odd rows and even rows whose color pixel dot positions are the same, respectively, but this arrangement can be changed like the mosaic arrangement previously described such that a set of the three primary colors of R, G and B can be obtained regarding a set of color pixel dots included in three rows and one column. Examples of the delta arrangement and the mosaic color pixel dot arrangement are shown in Figs. 36A, 36B and 36C.

(Relationship between pixel arrangement and light beam direction restricting element)

Regarding the arrangement structure of the pixel display element and the light beam direction restricting element described above, a relationship on a screen therebetween will be described in detail. For simplification, information about the color arrangement will be omitted.

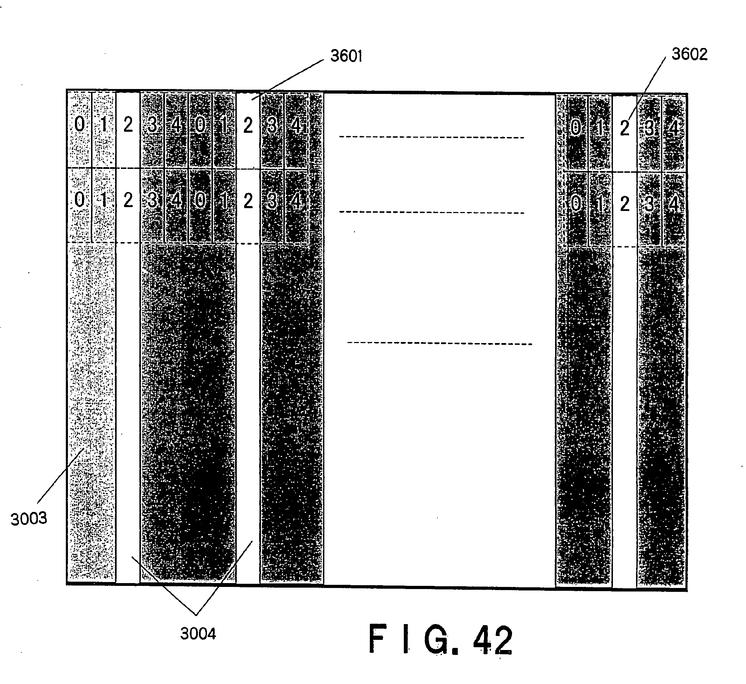

In a constitution where a light beam direction restricting element constituted of a slit array is arranged in front of an image display element having a stripe arrangement, as shown in Fig. 37, an example where a display screen has been observed is shown in Fig. 42. In Fig. 42, by using a slit array 3003 having apertures 3004 extending linearly in a vertical direction on a screen, color pixel dots representing image information corresponding to a number 2 of the parallax image number 3602 can be viewed. By moving a viewpoint in a horizontal direction parallel to the screen, a different parallax image can be viewed.

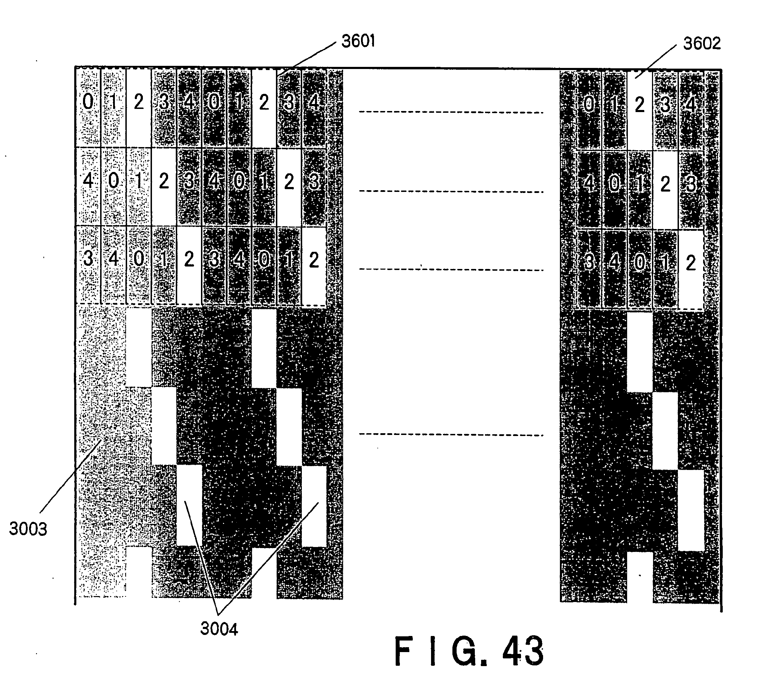

Fig. 43 is a diagram showing an example where a slit array 3003 having such a shape that the apertures 3004 are shifted for each one pixel dot pitch in a row direction is provided. By selecting a proper slit shape in view of a color filter arrangement, the same parallax image number 3602 can be allocated to color pixel dots 3601 not only in the same column but also in a different column.

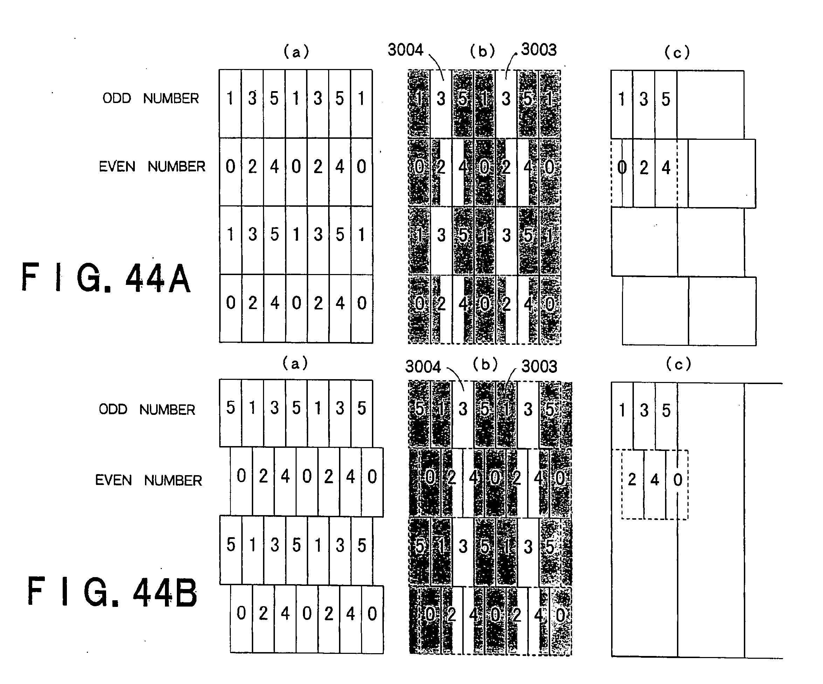

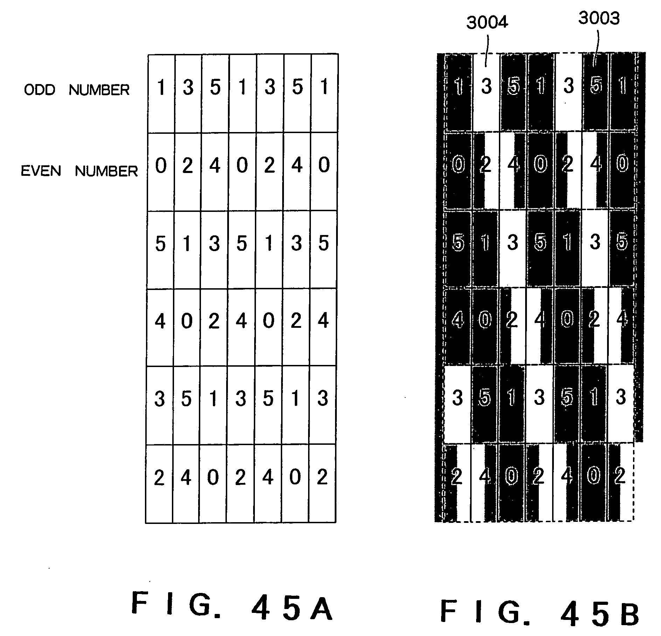

Figs. 44A(a), 44A(b) and 44A(c), Figs. 44B(a), 44B(b) and 44B(c), and Figs. 45A and 45B are examples where light beam emitting directions of two rows are provided by shifting a color pixel dot arrangement or aperture positions of slits for each 1/2 of a horizontal pitch of color pixel dots. Figs. 44A(a), 44A(b) and 44A(c), and Figs. 45A and 45B are examples where the pitch of the slit array 3003 is shifted by 1/2 in the stripe arrangement (refer to Figs. 44A(a) and 45A), and Figs. 44B(a), 44B(b) and 44B(c) are an example where a slit array 3003 (Fig. 44B(b)) with linear apertures 3004 is combined with the delta arrangement (Fig. 44B(a) (refer to Fig. 44B(c)). It is found that parallax image numbers are shifted over two rows of an odd row and an even row by shifting a viewpoint in a direction of parallel to a display screen (in a horizontal direction). The above example is an example where 1/2 shift is performed in the horizontal direction pitch of the color pixel dots. However, it will be apparent that light beam directions can be distributed over n rows by performing 1/n shifting. With such a constitution, a vertical resolution of an image is degraded, but dense can be achieved owing to distribution of light beam directions to a plurality of rows or moire reduction can be achieved owing to distribution of pixel apertures and displays of black matrix to a screen according to viewpoint movement.

In the above, the examples using the slit array have been shown, but it will be apparent that the lenticular sheet can also be used in a similar manner to the slit array on principle.

(Regarding production of a parallax image)

When a stereoscopic image is displayed, a parallax image is required to reflect parallax information correctly. The parallax image is constituted of photographed images obtained by a camera or a virtual camera in a CG (computer graphic) space.

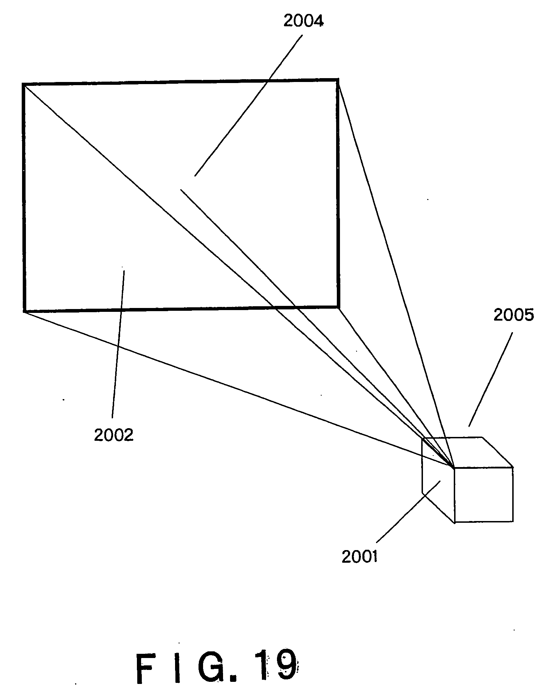

Fig. 19 is a diagram for explaining a parameter of a (virtual) camera 2001. For production of photographed images, a viewpoint 2005 constituting a camera photographing position is set, a photographing reference plane 2002 is determined and a target point 2004 is set on the photographing reference plane.

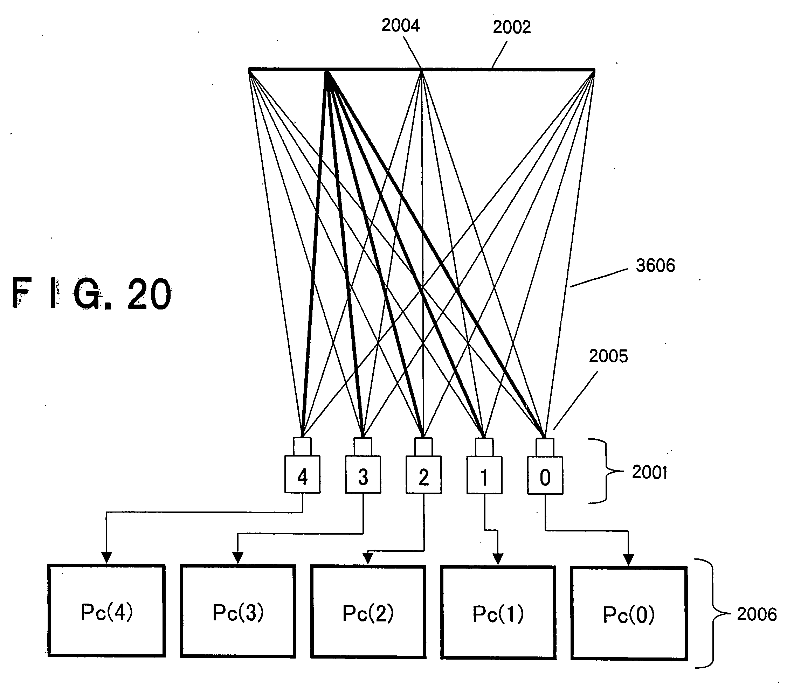

An example showing each parameter of a camera corresponding to a constitution in each of multiview systems shown in Figs. 37 to 39 is shown in Fig. 20. It is found from a distribution shape of light beams 3606 in each of the stereoscopic image display devices shown in Figs. 37 to 38 that a viewpoint 2005 of a viewer corresponds to a viewpoint of a camera 2001 and a target point 2004 corresponds to a center of a screen of the stereoscopic image display device and a photographing reference plane 2002 corresponds to a pupil position of the light beam direction restricting element. Photographed images 2006 correspond one-to-one with parallax images. The camera performs perspective projection photographing or CG rendering. The camera 2001 is correctly opposed to the photographing reference plane 2002 and its position is shifted horizontally.

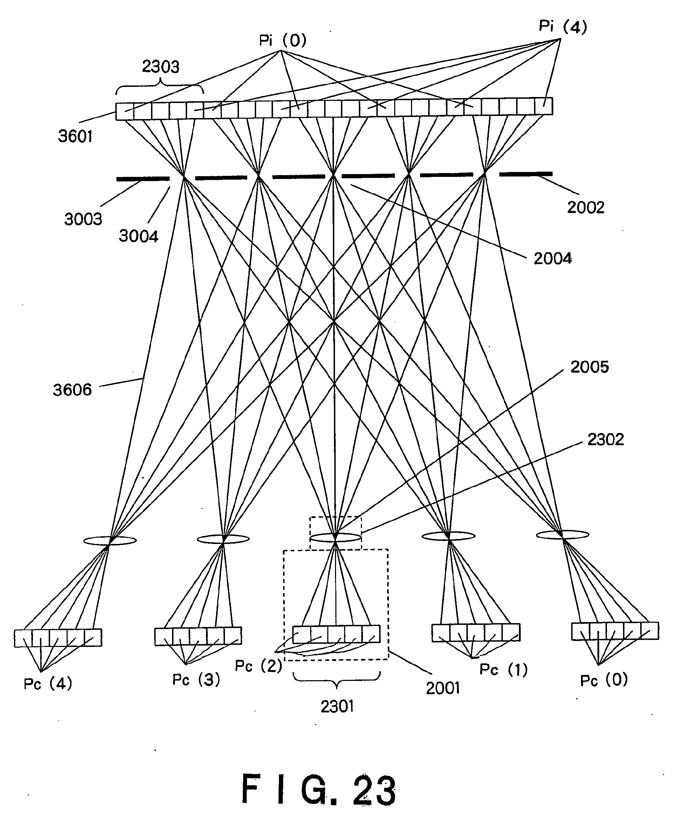

An example showing a relationship between Fig. 20 and Fig. 37 more directly is shown in Fig. 23. Photograph images Pc(0) to Pc(4) are photographed on a photographing image plane 2301 of a camera 2001 at five viewpoints 2005 by perspective projection. A correspondence relationship between an information piece about pixel dots constituting a photograph image 2006 and a position or a dot of the color pixel dots 3601 is clearly shown by a locus of one of light beams 3606. The photograph images Pc(0) to Pc(4) at respective camera positions correspond one-to-one with parallax images Pi(0) to Pi(4) of a set, and pixel dot information pieces of each parallax image are allocated to respective apertures 3004 of the slit array 3003 one pixel dot by one pixel dot for each slit array 3003 in a distributing manner. pixel dot information pieces comprising a plurality of parallax images allocated to one aperture 3004 of the slit array 3003 constitutes an image unit called "an elemental image" 2303. The stereoscopic image information pieces allocated to the color pixel dots 3601 in this manner is constituted as a group of elemental images comprising a plurality of elemental images, each elemental image being constituted of a parallax image corresponding to a photograph image of a camera. In Fig. 23, reference numeral 2301 denotes a photograph image.

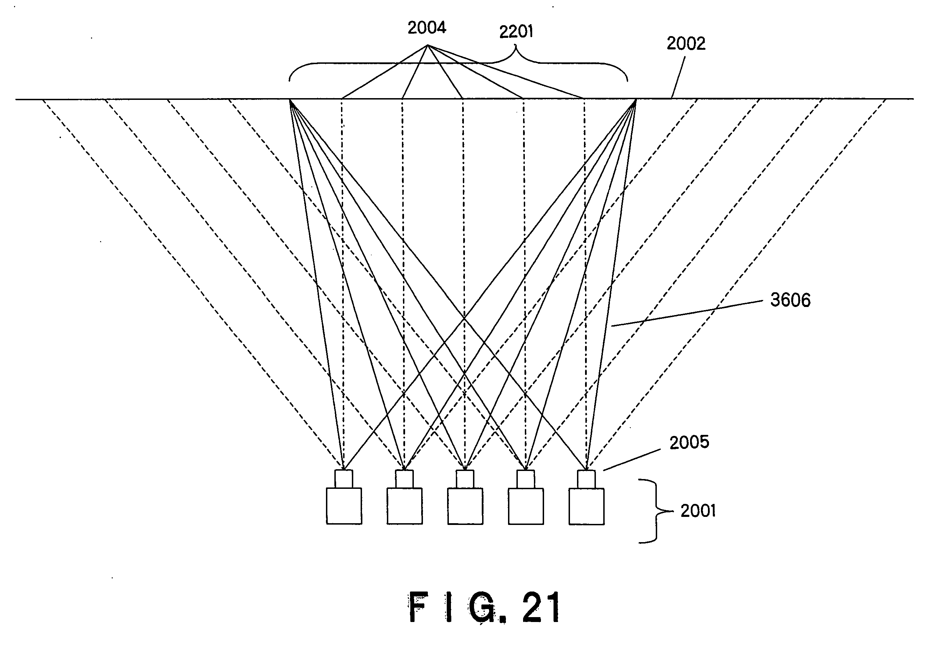

Fig. 21 shows an example where image photographing is conducted using a further popular camera. When a camera 2001 is caused to be exactly opposed to a photographing reference plane 2002 and it is moved in parallel to the photographing reference plane 2002, each target point 2004 is also moved according to movement of the viewpoint 2005 of the camera. Therefore, photographing is performed using a wide-angle camera according to Fig. 21 only image information pieces corresponding to a range 2201 corresponding to a display plane of a stereoscopic image display device is extracted so that parallax images are produced. In Fig. 21, reference numeral 3606 denotes light beams.

On the other hand, it is understood from an emitting distribution of light beams 3606 in Fig. 24 that a photographing method of a (virtual) camera in a constitution where a group of parallel light beams are used in an integral imaging system requires photographing conducted by orthographic projection, namely, with a photographing distance which has been set at infinity in order to avoid strain. It is difficult to perform photographing with a viewing distance of infinity in an actual camera photographing, but such photographing can easily be performed in rendering of a virtual camera in a CG space.

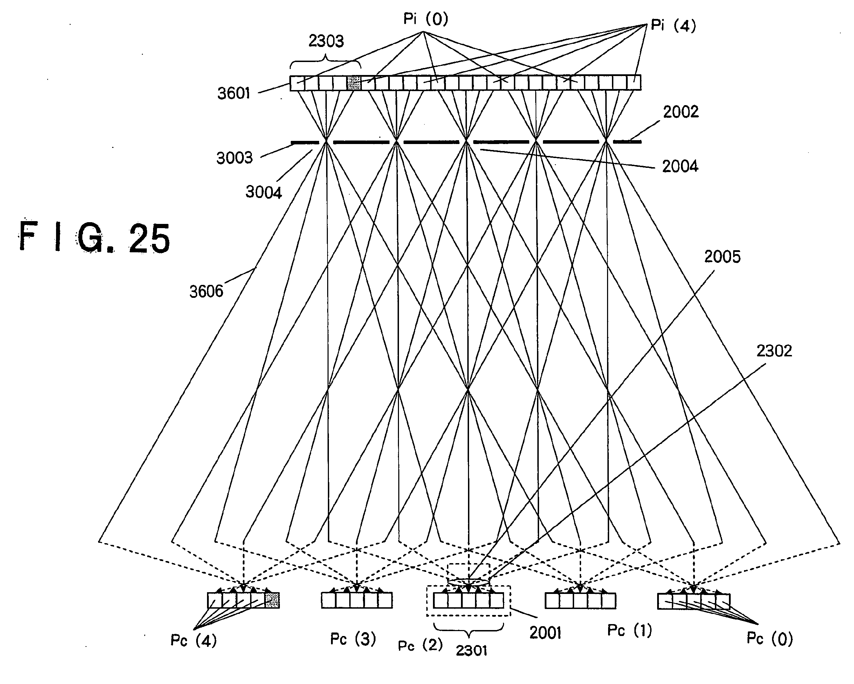

Further, in the integral imaging system, an example showing a relationship between a photograph image and a stereoscopic image further directly is shown in Fig. 25. A photographing method using a camera 2001 is fundamentally similar to the photographing method shown in Fig. 23 corresponding to the multiview system except for orthographic projection.

In Fig. 25, since a photographing distance is set at infinity, photograph images Pc (i) (i = 0, ..., 4) correspond one-to-one with parallax images Pi(i), and a correspondence relationship between numbers allocated to the photograph images and the numbers allocated to the parallax images is the same in all elemental images.

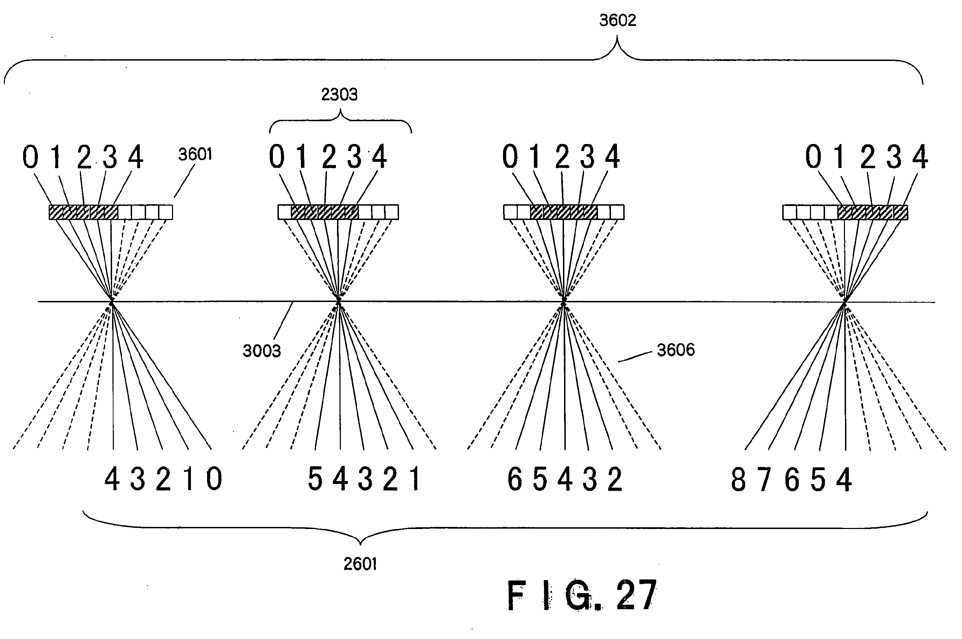

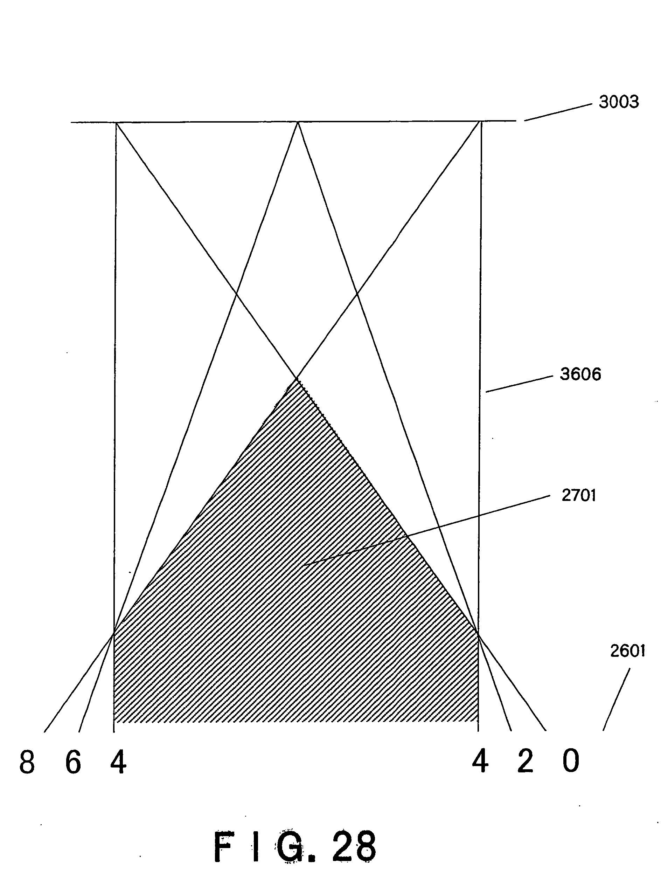

On the other hand, in a finite photographing distance, it is made possible to expand a range in which a stereoscopic image can be viewed, or a viewing zone by making the number of photograph images more than the number of parallax images. Fig. 27 shows one example of a correspondence relationship in a case that the number of parallax images is 5 and the number of photograph images is 9 in one elemental image. Since a pitch of sets of color image dots 3601 and a pitch of aperture intervals of a slit array 3003 are equal to each other, an emitting distribution of light beams 3606 forms a group of parallel light beams to one another. Here, by shifting a set of color pixel dots allocated with five parallax images 0 to 4 represented by the parallax image numbers 3602 according to a horizontal position on a screen, a positional relationship between an aperture of the slit array 3003 and color pixel dots 3601 to be viewed through the aperture can be set to a perspective projection relationship. A right stereoscopic image can be viewed by allocating five images of photograph images represented by 0 to 8 of the photograph image number 2601 corresponding to light emitting directions of respective light beams 3606 to respective parallax image numbers. A viewing zone 2701 obtained at this time is shown in Fig. 28. It will be found that the viewing region 2701 has been expanded as compared with the case that the numbers of photograph images and parallax images are equal to each other. Incidentally, the number of parallax images at this time is increased to 6 at some positions because the color pixel dots must be shifted.

As described above, it should be noted that the photograph images do not correspond one-to-one with the parallax images. In this text, an image to be allocated to color pixel dots is called the "parallax image", which is discriminated from the photograph image.

Embodiments of the present invention will be explained in detail below with reference to the drawings. A constitution of the present invention is not limited to the embodiments described below, but it can takes any aspect obtained by combining respective sections or portions of the constitutions described in the embodiments and examples of the present invention. For simplification of explanation, same members over plural figures are denoted by same reference numerals.

(First Embodiment)

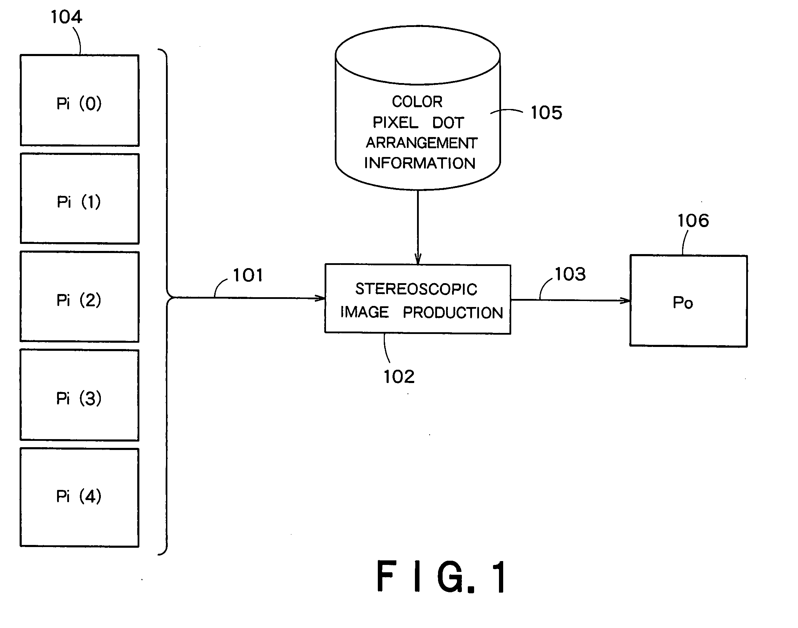

A basic constitution of a stereoscopic image producing method according to a first embodiment of the present invention is shown in Fig. 1. The stereoscopic image producing method has a step 101 of inputting a set of five kinds of parallax images indicated by Pi(0) to Pi(4), a step 102 of producing a stereoscopic image 106 indicated by Po on the basis of color pixel dot arrangement information 105, and a step 103 of outputting the produced stereoscopic image 106. The color pixel dot arrangement information 105 means information showing an arranging order of three primary color pixel dots in an image display element for displaying color image information, namely, color pixel dots of red (R), green (G) and blue (B).

In the stereoscopic image producing step 102, while referencing to the color pixel dot arrangement information, a stereoscopic image is produced by combining some pieces or all pieces of the three primary color information for respective dots constituting the parallax image 104 according to a predetermined format. In the step, while further referencing to additive information for the parallax image (not shown specifically) (information including a viewing line direction clearly indicating a relationship between parallax images, photographing or CG producing conditions, or a docketing number or a file name corresponding to these conditions), additive information of a light beam direction restricting element in the stereoscopic image display device (information indicating a pitch or an angle, a mounting position relationship with the image display element), the stereoscopic image may be produced. That is, it is only required to accurately define color information about respective color pixel dots in the image display element of the stereoscopic image display device, directions in which the pixel dots can be viewed, and a correspondence relationship between a direction in which a viewer views a parallax image and each parallax image. It is not required to reference to these information pieces explicitly in the producing step 102. For example, in the input step 101 of the parallax images, such a constitution can be employed that a rule is preliminarily set such that the order of parallax images designated sequentially defines the order of the viewing line directions, and a fixedly combination according to the color pixel dot information is applied.

The constituent elements of this embodiment such as a relationship between a parallax image and color image dot information, and a specific approach for stereoscopic image production will be explained later.

(Second Embodiment)

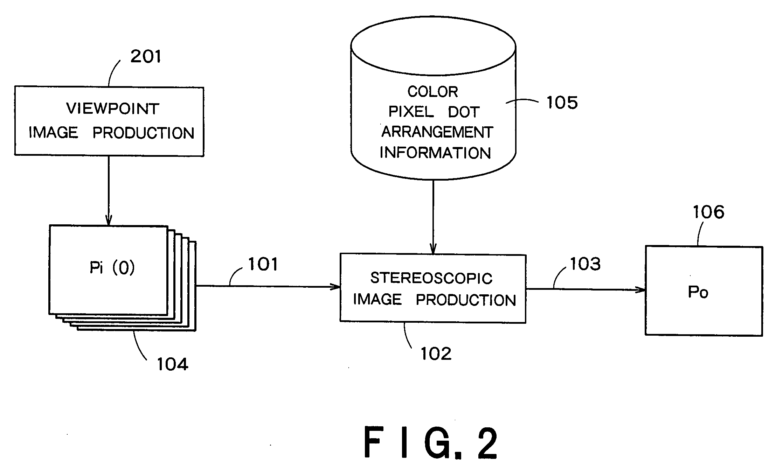

Fig. 2 is a diagram showing a constitution of a stereoscopic image producing method according to a second embodiment of the present invention. The embodiment is a stereoscopic image producing method including a step 201 of producing parallax images in addition to the steps shown in the first embodiment. A detail approach for a parallax image production will be explained later. The step 201 is realized by a photographing unit such as a camera, or computation according to CG rendering based on a three-dimensional model.

(Third Embodiment)

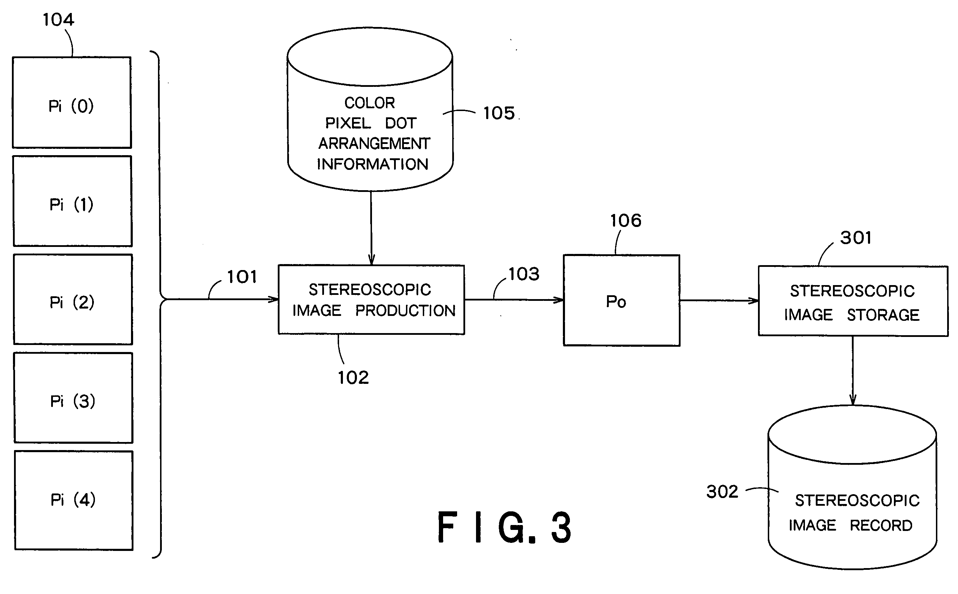

Fig. 3 is a block diagram showing a constitution of a stereoscopic image producing method according to a third embodiment of the present invention. The third embodiment is a stereoscopic image producing method including a stereoscopic image storing step 301 which stores a stereoscopic image 106 produced in the first embodiment in a stereoscopic image recording unit 302. In the embodiment, for example, a converting tool which converts existing parallax image information in a stream format to store the same can be realized. A video recording device which converts and records video information distributed by broadcasting or the like, or a recording camera including an image pickup and producing unit for parallax images based upon a combination with the second embodiment, such as a stereoscopic video image pickup camera can be realized.

(Fourth Embodiment)

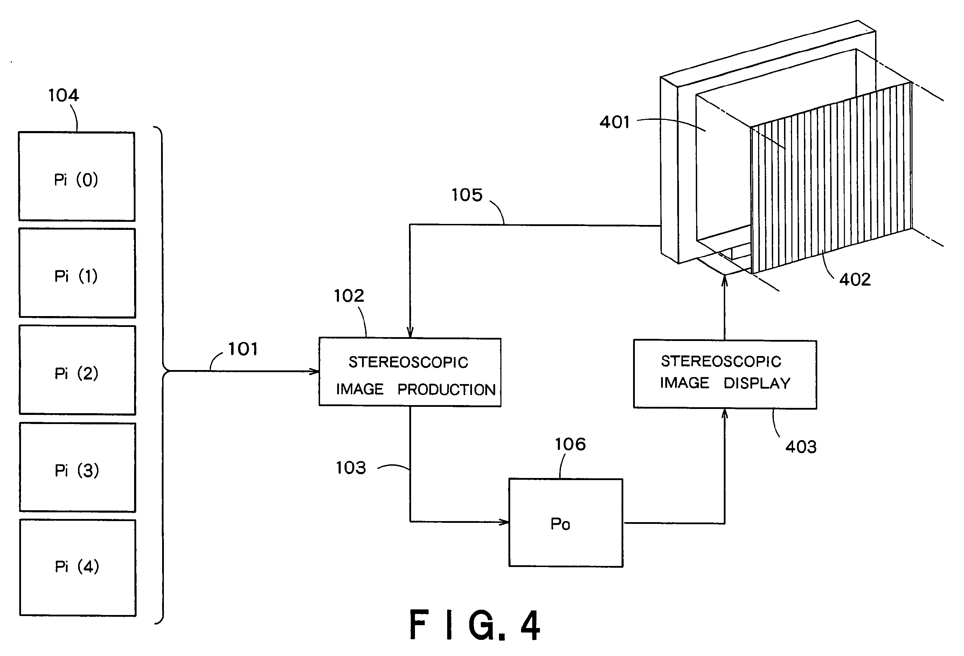

Fig. 4 is a block diagram showing a constitution of a stereoscopic image display device according to a fourth embodiment of the present invention. This embodiment is a stereoscopic image display device constituted so as to perform stereoscopic image display by causing an image display element driving unit 403 to display a stereoscopic image 106 produced by the first embodiment on an image display element 401. The stereoscopic image display device is provided with a light beam direction restricting element 402 described later, so that a stereoscopic image can be observed by viewing the stereoscopic image 106 displayed on the image display element 401 via the light beam direction restricting element 402. In this embodiment, color pixel dot arrangement information 105 referenced when a stereoscopic image is produced corresponds to the image display element 401, where such a constitution can be employed that the color pixel dot arrangement information 105 is updated according to change of the image display element 401 and the light beam direction restricting element 402 through cable connection like a display driver. Information about the light beam direction restricting element 402 may be referenced to when a stereoscopic image is produced in order to accommodate exchange of only the light beam direction restricting element 402 or change in displaying state (not shown specifically). Here, the color pixel dot arrangement information 105 may include information about a ratio of an elemental image width and a color pixel dot pitch (or information equivalent to this information) described later.

Examples of the stereoscopic image producing method and the stereoscopic image display device of the present invention will be explained below on the basis of the embodiments described above.

(Example 1)

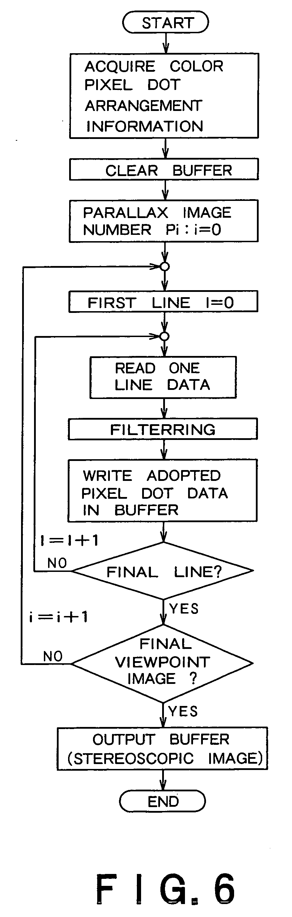

Fig. 6 is a flowchart showing a constitution of a first example of the stereoscopic image producing method of the present invention, which shows a specific processing flow of the stereoscopic image producing step 102. This example has a feature that each parallax image size and a stereoscopic image size produced are substantially equal times each other and a stereoscopic image is synthesized using only some pieces of color information pieces of one pixel included in a parallax image.

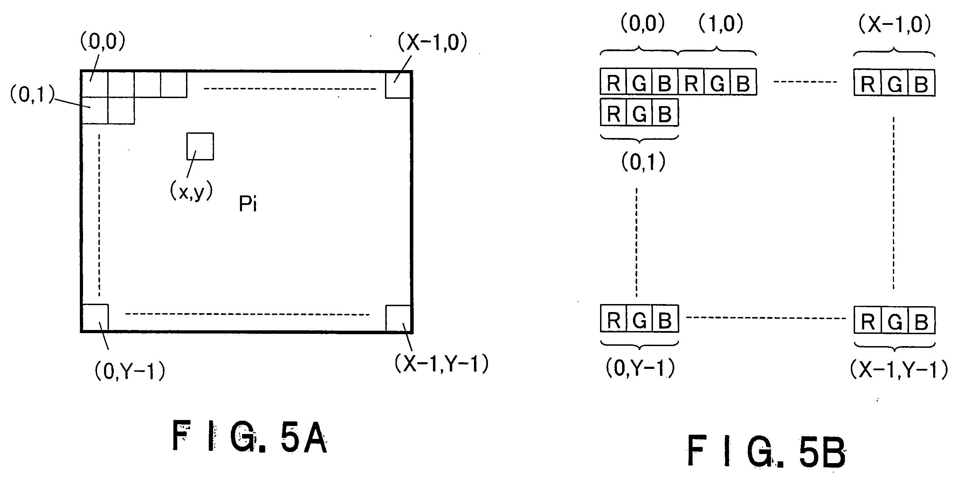

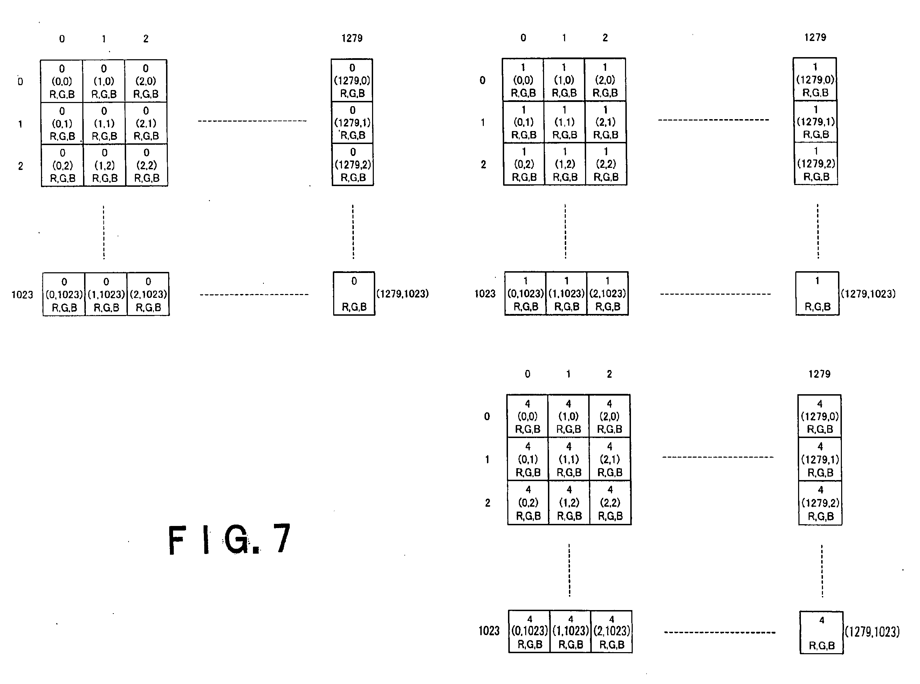

The image display element assumed in this example has a stripe arrangement and a mosaic color pixel dot arrangement, and consideration is made about a combination of the image display element and a light beam direction restricting element such as having the same parallax in a column direction shown in Fig. 42. An image format of a parallax image 104 shown by Pi is constituted of coordinates (x, y) showing a position of a pixel (Fig. SA) and three primary color information of RGB in respective coordinate positions (Fig. 5B), as shown in Figs. 5A and 5B. Image information about each parallax image is written down as shown in Fig. 7. When the image size is defined as SXGA (1280 x 1024), a portion surrounded by a regular square grid or frame represents one pixel, and a parallax image number, screen-inside coordinates and color information in a descending order. A case that there is a description of RGB in the color information indicates the fact that the pixel holds information about all the three primary colors.

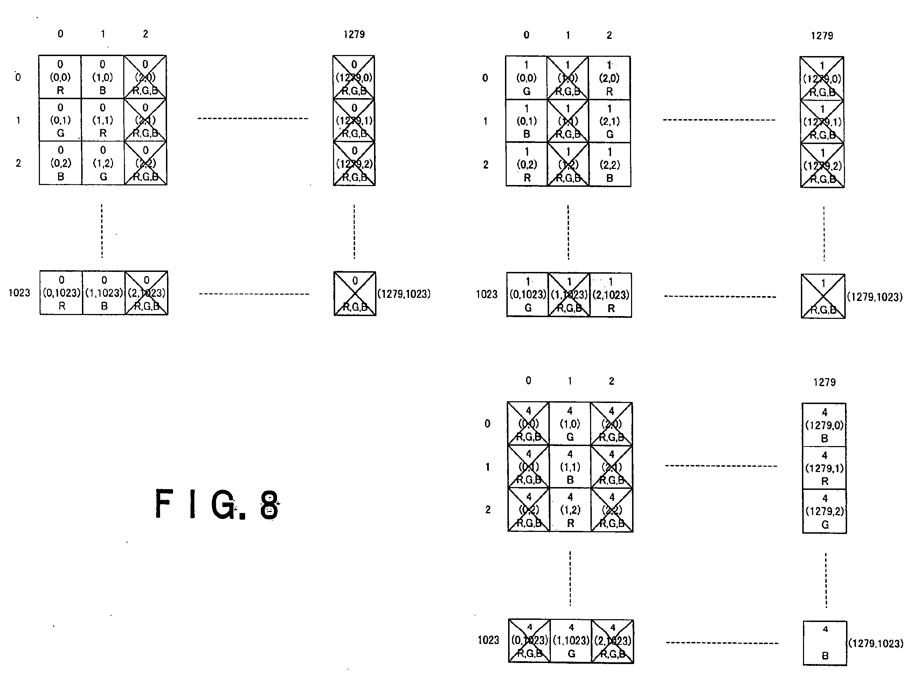

According to Fig. 6, respective parallax images are sequentially read in for one line, image information required is discriminated according to a filtering processing while color pixel dot arrangement information acquired in advance is being referenced to, and the information is outputted to a frame buffer for stereoscopic image production. Since the color pixel dot arrangement information includes a stripe arrangement and a mosaic color pixel dot arrangement, and parallax image numbers are allocated in a horizontal direction for each color pixel dot, the same column has the same parallax image number, the pixel information adopted in each parallax image has such a constitution as shown in Fig. 8. In Fig. 8, mark X denotes a pixel which has not been adopted at all in the stereoscopic image. In Fig. 8, all the color information pieces are not held in each pixel, for example, only R information piece is held in a pixel defined by 0 row and 0 column of the parallax image number 1. That is, it should be noted that color in each pixel has been collapsed. For example, when image information having a frequency approximating to a Nyquist frequency component defined by a pixel dot pitch in a column direction (in a vertical direction) is displayed, a color is collapsed and color smear occurs. However, in a stereoscopic image display device which applies parallax information in a horizontal direction, since a horizontal resolution is considerably inferior in a vertical resolution (since the number of parallax images is 5 in this example, the vertical resolution is 5/3 times the horizontal resolution), a phenomenon of such color collapse is rarely recognized practically.

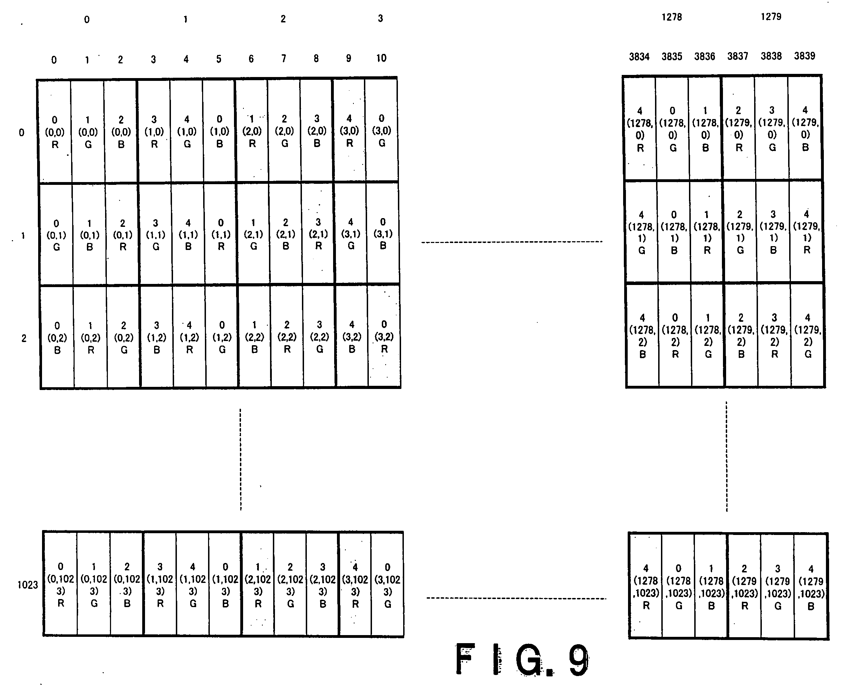

Fig. 9 is a diagram showing a stereoscopic image information mapped to color pixel dots of an image display element. Since this example is directed to a simple algorithm, it is made possible to produce a stereoscopic image from a set of parallax images at a fast speed. In particular, this algorithm is suitable for a case that parallax images are existing and they have the same size as a size of the stereoscopic image.

(Second Example)

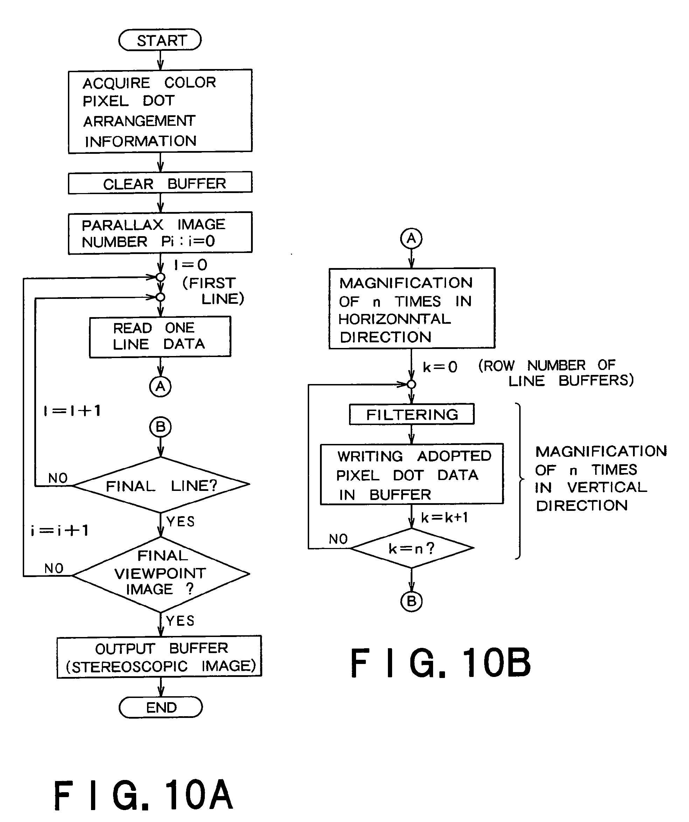

Figs. 10A and 10B are flowcharts showing processing steps in a second example according to the image producing method of the present invention. The example has such a feature that a step of allocating image information pieces of parallax images in a screen vertical direction efficiently and fast by performing equal magnification expanding process in horizontal and vertical directions on a parallax image size is provided. For example, it is assumed that a stereoscopic image size is SXGA and a parallax image size is 427 x 342 pixels which is 1/3 in the horizontal and vertical directions. When the number of parallax images is 9, since parallax image numbers are allocated for each color pixel dot, the same pixel information is prevented from being adopted in a stereoscopic image, even if the parallax image is developed to three times.

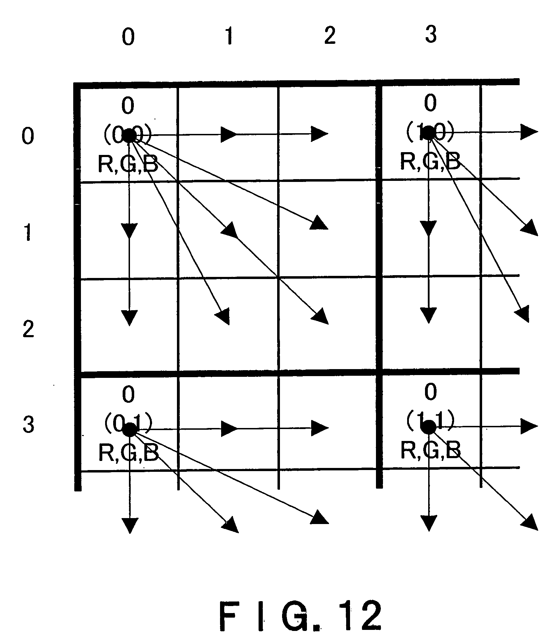

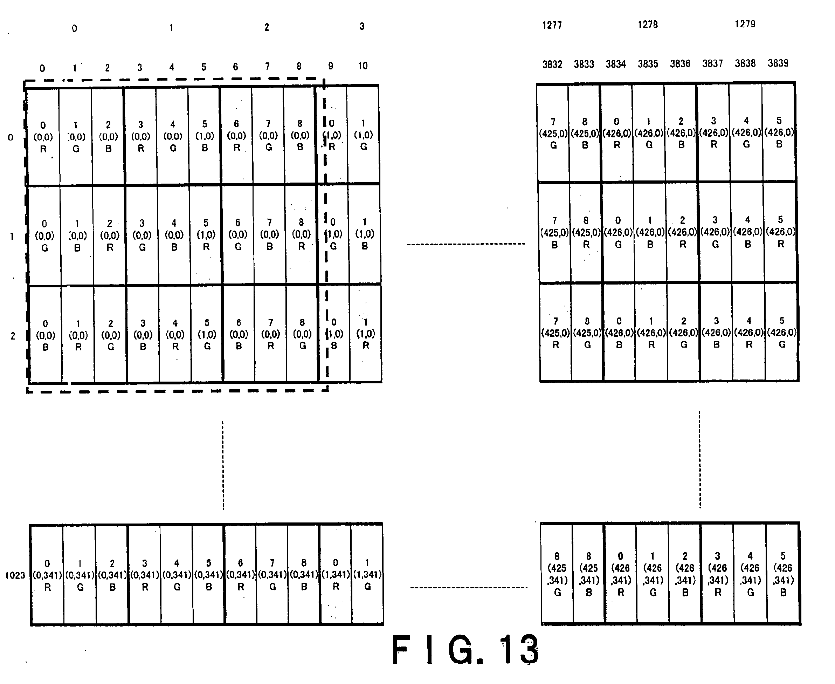

Fig. 12 is a diagram showing an aspect where a parallax image is magnified to 3 x 3 times. In coordinates of a stereoscopic image, pixels from (0, 0) to (2, 2) are allocated with the same pixel information, but the same image information is adopted to only a first column of image dots in a stereoscopic image, and the same image information allocated to the remaining dots is discarded, so that overlap of data can be avoided. Further, such an advantage can also be obtained that, when the color pixel dot arrangement is a mosaic arrangement, as shown in Fig. 13, RGB color information held by a parallax image is interleaved or re-arranged in a vertical direction on a screen.

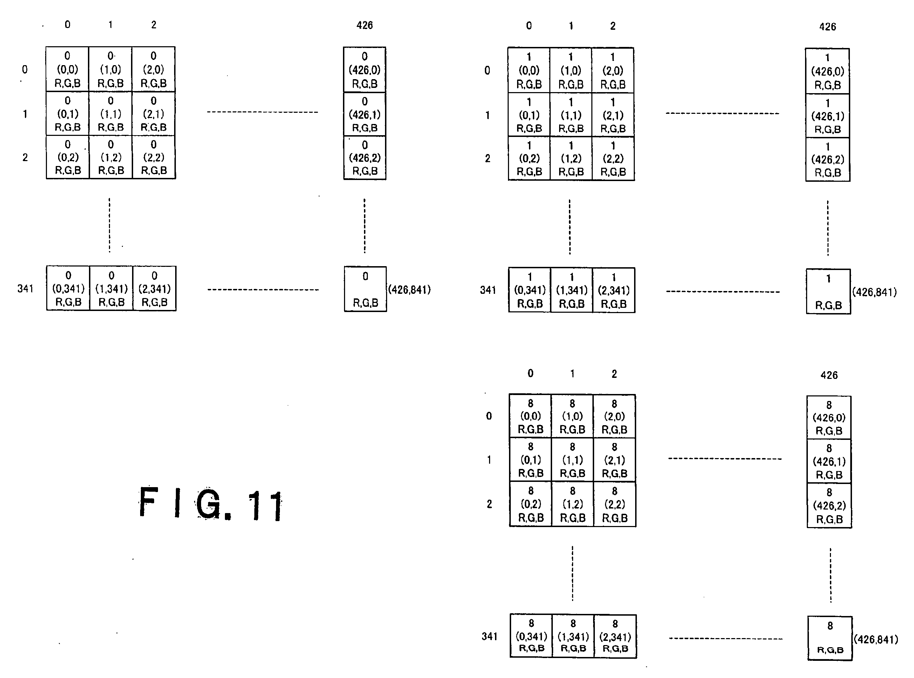

According to Figs. 10A and 10B, like the first example, a stereoscopic image can be produced by sequentially inputting parallax images, performing enlarging processings in horizontal and vertical directions for line, and performing a filtering operation. A frame processing may be performed but a volume of memory can be reduced, because the processing for each line requires only a line buffer. Fig. 11 is a diagram showing a parallax image and Fig. 13 is a diagram showing stereoscopic image information mapped on color pixel dots of an image display element.

In the example, the parallax image size and the stereoscopic image size are provided in advance. However, when the parallax image producing step in the second embodiment is included in this example, it is made possible to select an optimal parallax image size to be photographed (produced) from the number of parallax images and the stereoscopic image size.

(Example 3)

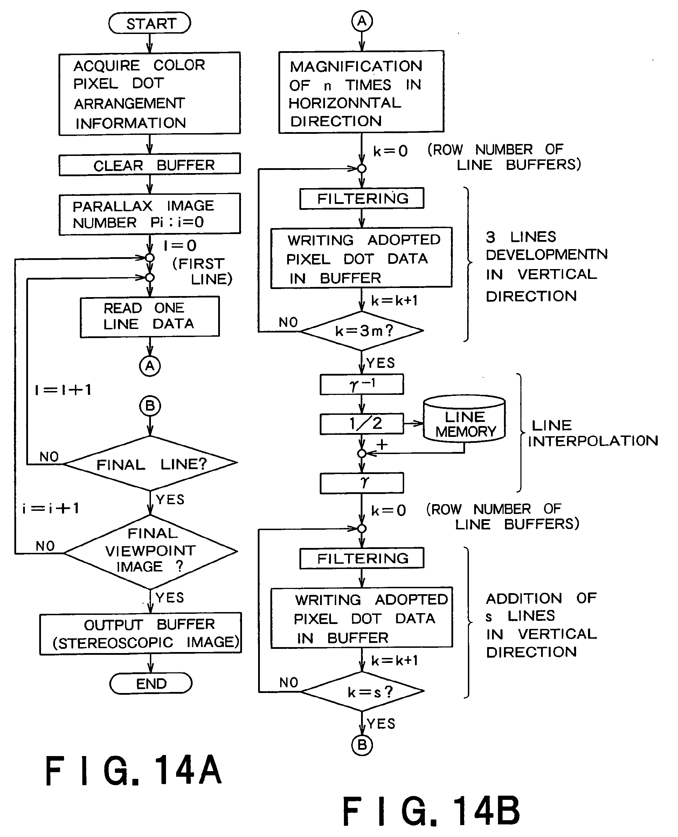

Figs. 14A and 14B are flowcharts showing processing steps in a third example according to the stereoscopic image producing method of the present invention. This example has a feature that an interpolating processing for each predetermined lines is provided in the constitution shown in example 2. The example has a processing flow where, for example, assumed that n is a natural number of 3 or more and the parallax image size is 1/n x 1/n size to the stereoscopic image size, when the parallax image size is made n times in a horizontal direction and it is represented in a vertical direction with $n = 3 \times m + s$ (here, m is a natural number and s is an integer meeting $0 \leq s \leq 2$), and the parallax image size is made 3m times in the vertical direction by further adding s lines through interpolation.

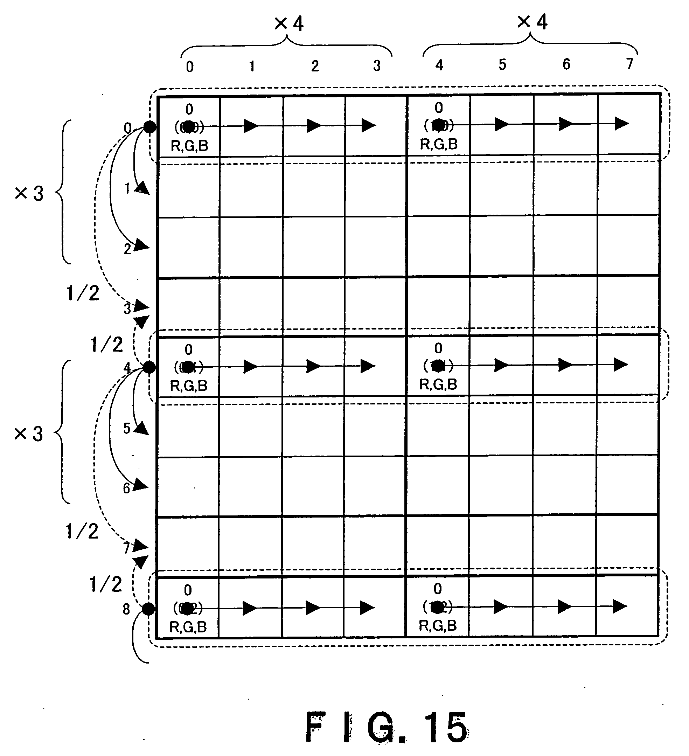

By using such a processing flow, when the enlarging magnification of the parallax image is any magnification except for 3m, it is made possible to reduce mismatching between upper and lower lines. In particular, when the color pixel dot arrangement information is directed to a mosaic arrangement, since a set of RGB appears for each three lines in the vertical direction, a case that color information is collapsed except for 3m may occur. This example is suitable for compensating for this problem. Fig. 15 is a diagram showing an example where the parallax image is made 4 times in a horizontal direction and it is made 3 times in a vertical direction under the condition of $n = 4$, $m = 1$ and $s = 1$ so that one line is added as an interpolation line. The step of line interpolation includes a step of linearly quantizing pixel information non-linearly quantized such that a gradation characteristic is not changed.

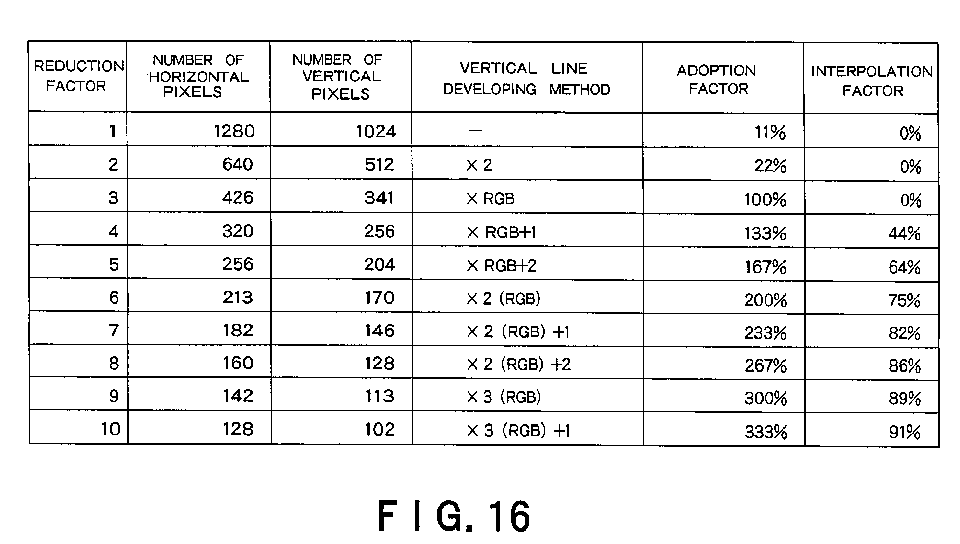

As explained above, by using the first to third examples properly or selectively, it is made possible to select a parallax image size with the most excellent efficiency to any number of parallax images in a stereoscopic image display method including a step of producing parallax images such as, particularly, in the second embodiment. Fig. 16 is a table showing an adoption factor and an interpolation factor of each parallax image to a magnification of the number of parallax images (n of 1/n is shown as a reduction factor) under a condition that the number of parallax images is 9 and a stereoscopic image size is SXGA. Here, the adoption factor is a ratio of the number of pixel information pieces adopted for a stereoscopic image in each parallax image (a case of > 100% shows that the same parallax image information piece is adopted at different coordinate position in the stereoscopic image information plural times), and the interpolation factor is a ratio of the number of pixel information pieces produced newly from the parallax image information due to interpolation. In Fig. 16, it is found that the highest efficiency can be obtained in a reduction factor of 3, because all information pieces of a parallax image are adopted and interpolation does not occur.

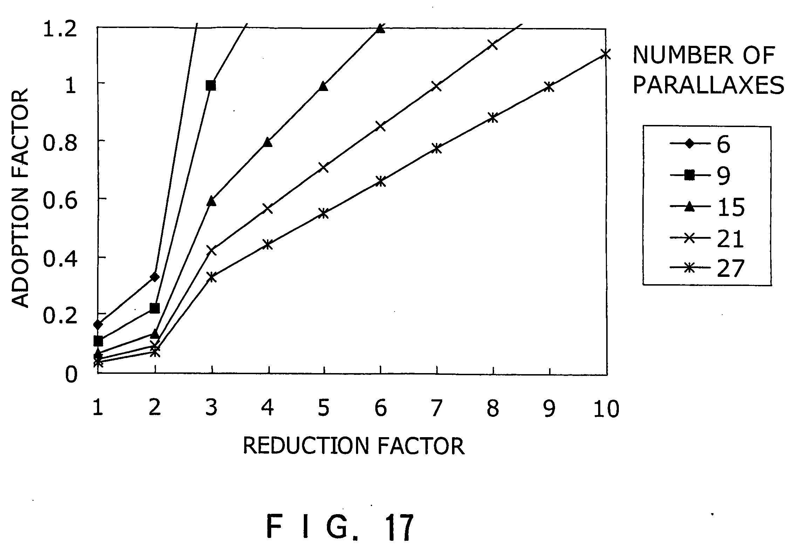

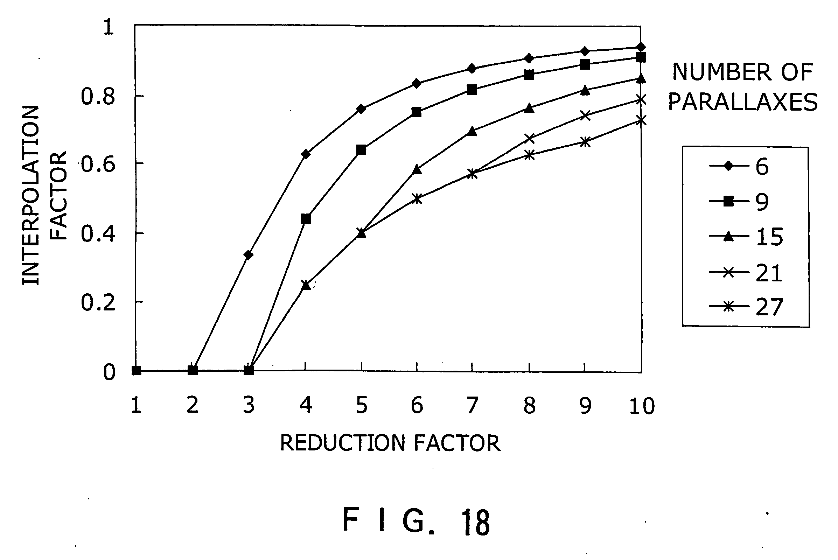

Fig. 17 is a graph showing a relationship between a reduction factor and an adoption factor of a parallax image obtained when the number of parallaxes (the number of parallax images) is 6, 9, 15, 21 and 27, and Fig. 18 is a graph showing a relationship between the reduction factor and an interpolation factor. In the step of producing a stereoscopic image, it is most desirable to select a parallax image size meeting the condition that the adoption factor approximates to 1 and the interpolation factor approximates to 0. The above adoption factor and the interpolation factor are held when the parallax images are fixedly allocated to the entire screen of the image display element (a multiview system or an ordinary integral imaging). In an integral imaging system where the viewing zone is optimized, shown in Figs. 27 and 28, since a parallax image is adopted on a partial region of the image display element in some cases, a value varies slightly. Further, the cases about the stripe arrangement and the mosaic color pixel dot arrangement have been described in the above examples. Even in other color pixel dot arrangement or such a constitution that allocation of parallax image numbers varies in the vertical direction such as shown in Fig. 43, similar advantage can be apparently obtained by adopting color pixel dot arrangement information and allocation of parallax images suitable for the constitution to perform a filtering processing.

(Example 4)

Incidentally, two kinds of the integral imaging system which displays a stereoscopic image by orthographic projection and the multiview system which displays a stereoscopic image by perspective projection, and two kinds of lenses and slits used as the light beam direction restricting element have been handled in this invention. However, it is unnecessary to discriminate producing methods except whether an parallax image to be inputted should be obtained through orthographic projection or perspective projection for producing a stereoscopic image. When information about whether the light beam direction restricting element is positioned before or after the image display element and information about a ratio of an elemental image width and a dot pitch of color pixel dots or information equivalent thereto (for example, information about an elemental image width and a pixel dot pitch or the like) are obtained, a stereoscopic image can be produced according to an integrated step.

In this example, first, a relationship between an elemental image width and an observation condition will be explained, and a relationship between an elemental image width and a dot pitch of color pixel dots in an integral imaging system and in a multiview system will be shown. Subsequently, the step of producing a stereoscopic image integrally from a ratio of the elemental image width and the dot pitch of color pixel dots will be explained.

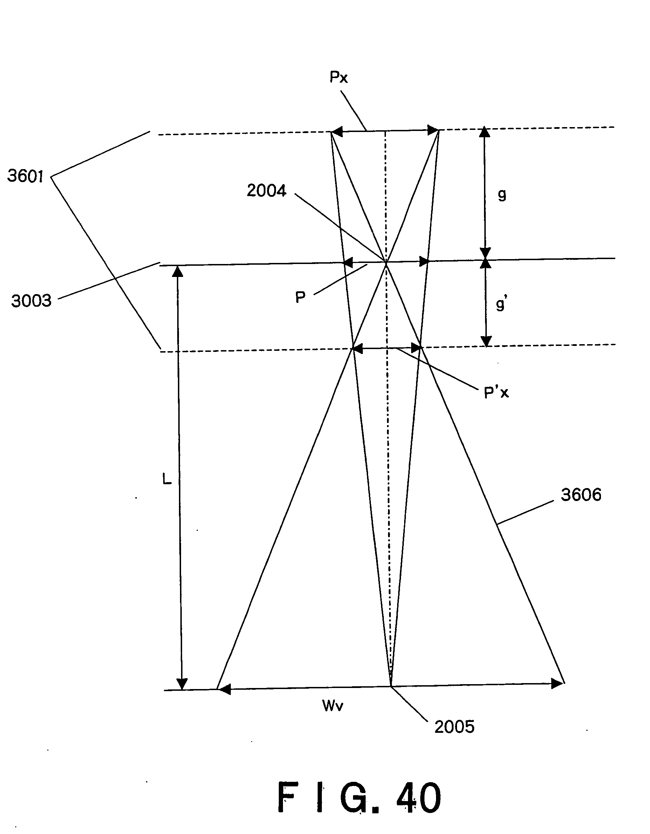

Fig. 40 is a diagram showing a relationship between elemental image widths Px, P'x in a stereoscopic image and observing conditions such as distances g, g' between a slit array 3003 which is the light beam restricting element and color pixel dots, a viewing distance L and a viewing zone Wv. Fig. 40 simultaneously shows two of a case that the color pixel dots 3601 are provided in front of the slit array 3003 and a case that the former is provided behind the latter. In Fig. 40, reference numeral 2005 denotes a viewpoint of a viewer. When a distance in which a viewer observes a stereoscopic image normally is defined as a viewing distance L, and a range in which a stereoscopic image can be viewed normally in the viewing distance L is defined as a viewing zone (width) Wv, the following equations are obtained from Fig. 40.

$$L/Wv = g'/P'x = g/Px \qquad (1)$$

$$L/P = (L - g')/P'x = (L + g)/Px \qquad (2)$$

Accordingly, when the light beam direction restricting element is positioned in front of the image display element, the following equation (3) is obtained.

$$Px = Wv \cdot P/(Wv - P),\ g = L \cdot P/(Wv - P) \qquad (3)$$

When the light beam direction restricting element is positioned behind the image display element, the following equation (4) is obtained

$$P'x = Wv \cdot P/(Wv + P),\ g' = L \cdot P/(Wv + P) \qquad (4)$$

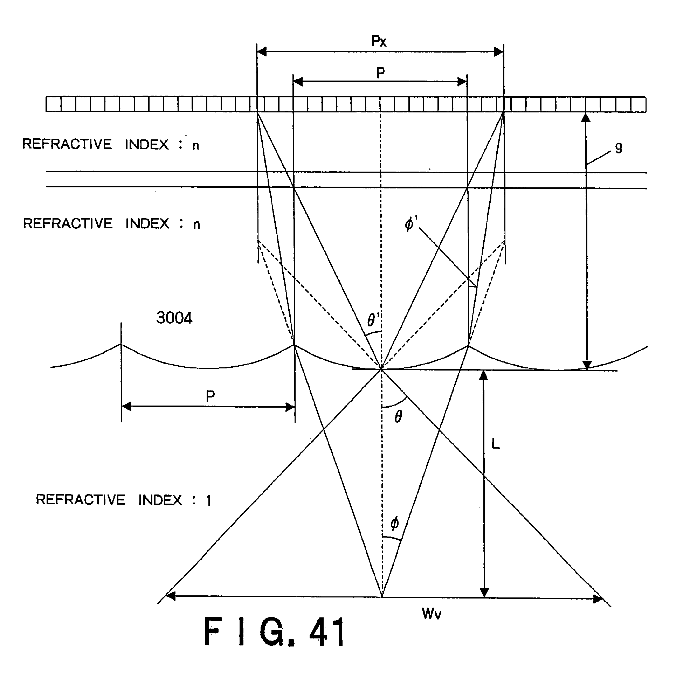

Fig. 41 is a diagram showing a relationship between an elemental image width Px when a refractive index of constituent elements of a lens and an image display element in case that the light beam direction restricting element is a lenticular sheet and observing conditions such as a distance g between a lenticular sheet 3004 with a lens pitch P and color pixel dots, a viewing distance L and a viewing zone Wv.

From Fig. 41, the followings are established.

$$\sin\theta = n \cdot \sin\theta' \qquad (5)$$

$$\sin\phi = n \cdot \sin\phi' \qquad (6)$$

$$2g \cdot \tan\theta' = Px \quad (7)$$

$$2L \cdot \tan\theta = Wv \quad (8)$$

$$2L \cdot \tan\phi = P \quad (9)$$

$$P + 2g \cdot \tan\phi' = Px \quad (10)$$

Assuming that $\theta$ and $\phi$ are proximity regions defined by fine angles,

$$Px = Wv \cdot P/(Wv - P), \quad g = n \cdot L \cdot P/(Wv - P) \quad (11)$$

is obtained. It is apparent from a comparison to Fig. 38B that the gap g in the equation (11) corresponds to a focal length of the lenticular sheet.

It is found from the table and equations obtained from the above that the elemental image width Px is an quantity defined from the viewing zone or viewing width Wv in the viewing distance L and the slit pitch or the lens pitch P, and it does not depend on the kind of the light beam direction restricting element. The gap "g" is defined from the refractive index "n" of the image display element and the light beam direction restricting element, the viewing distance L and the viewing zone width Wv. Even when the slit array is disposed in front of the image display element, if material with a refractive index of n is filled between the slit array and the image display element, the gap g defined by the equation (11) serves as a proper distance. Thus, such a fact can be shown that the elemental image width and the gap are quantities defined from the observing conditions, and therefore providing the viewing distance L, the viewing zone or viewing width Wv (or a viewing angle 2$\theta$) or the like is equivalent to providing the information about the elemental image width.

Next, the relationship between the elemental image and the pitch of color pixel dots means that integer (= (the number of parallax images - 1) per elemental image) times of a color pixel dot pitch in the multiview system is set to the elemental image width. This will be apparent from a relationship among a camera arrangement range at a target point 2004, an elemental image width and a pitch of the light beam angle between adjacent slits of a slit array at the same camera viewpoint, for example in Fig. 23. Accordingly, when a ratio of an elemental image width and a color pixel dot pitch is provided, it is made possible to immediately derive the number of viewpoints, namely the number of parallax images (= the number of photographed images) required.

On the other hand, in the integral imaging using a parallel light beam group, since the pitch of the light beam direction restricting element is set to integer times the color pixel dot pitch, the value of the elemental image width does not become integer times the color pixel dot pitch. However, based upon a relationship between actual viewing conditions and the color pixel dot pitch, a deviation from the integer times between the elemental image width and the color pixel dot pitch becomes a fine value. For example, under the condition of the viewing zone width Wv = 500mm and the pitch P = 1.0mm, the elemental image width Px becomes 1.002 which is a value larger than the pitch by only 0.2% from the equation (3). Accordingly, by providing a ratio of the elemental image width to the color pixel dot pitch practically, it is made possible to derive a required number of parallax images from the integer value of the ratio immediately.

Thus, by providing the ratio of the elemental image width to the color pixel dot pitch, it is made possible to obtain information about the required number of parallax images and the arrangement method. If necessary, discrimination about whether this system is the multiview system or the integral imaging system can be made on the basis of whether or not the ratio is an integer number. In a specific step of producing a stereoscopic image, since the required number of parallax images can be obtained, the parallax images may be sequentially arranged toward both ends of a screen using the center of the screen as a starting point of the elemental image according to the procedure shown in the examples 1 to 3 (since the ratio of the elemental image width to the color pixel dot pitch is the integer number, any deviation between a region to be allocated with the elemental image width and the position of the pixel dots does not occur).

In the integral imaging system, when only information about the integer values of the elemental image width to the color pixel dot pitch is used, a stereoscopic image having a coincidence in a set of parallax images and photographed images over the whole screen, which corresponds to the condition of the viewing distance infinity such as shown in Figs. 24 and 25 can be produced. Further, when parallax images are arranged by properly performing adding processing of fractions considering a positional deviation between the elemental image width and the color pixel image dot, a region of the elemental image allocated to the slit array aperture or the lens of the light beam direction restricting element is shifted toward an end portion of a screen due to accumulation of fractions. Therefore, by shifting a region to which an elemental image is allocated to the pixel dot while changing allocation in the light beam direction (namely, the parallax image number), as shown in Fig. 27, a viewing zone optimization processing for a deviation of half or more of a pixel dot such as shown in Fig. 28 can be made possible. Anyway, the producing step of deviating the number of parallax images from the ratio of the elemental image width to the color pixel dot pitch to allocate proper parallax images to color pixel dots from the center of a screen toward both ends thereof is common to both the multiview system and the integral imaging system.

In such a delta structure where arrangement of color pixel dots is shifted in a row direction (in a horizontal direction) by 1/2 pixel dot, it is apparent that a starting point of an elemental image may be shifted by 1/2 pixel dot for each row considering a shifting amount of a pixel dot. In this case, a value of 0.5 is included in the ratio of the elemental image width to the color pixel dot pitch, but since a deviation of a value of integer times of the elemental image width to the color pixel dot pitch due to the constitution of the integral imaging system of orthographic projection is 1% or less under the practical viewing conditions as shown in the previous example, a processing can be performed by utilizing a determination about whether or not the value of 0.5 is included in the ratio.

(Fifth Example)

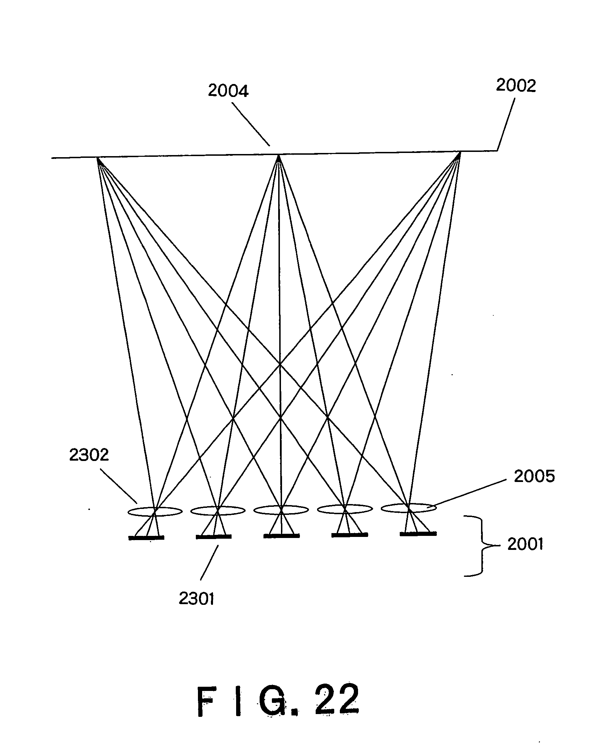

This example relates to a step of the parallax image producing according to the second embodiment. Fig. 22 is a diagram illustratively showing a principle of this example. Conventionally, as shown in Fig. 21, when the number of cameras (the number of photographed images) is increased, there occurs such a problem that an area ratio of a range (a display range 2201) which can be adopted as a photographing image to a photographing range of each camera 2001 is reduced. A structure shown in Fig. 22 has a feature that a photographing face (a film face) 2301 of a camera is sequentially shifted to a camera lens 2302. By providing such a shifting structure, it is made possible to fix a target point 2004 at the center of a stereoscopic image display range, so that it is also made possible to use the photographed image area without waste. In an actual photographing, the camera of this embodiment corresponds to have a so-called shift lens function. Fig. 22 shows an example of photographing conducted by perspective projection, but similar results will be obtained even in photographing performed by orthographic projection using a virtual camera.

(Example 6)

The example relates to a step of the parallax image producing according to the second embodiment. In a constitution of an integral imaging where photographing is conducted using a parallel light beam group shown in Fig. 24, it is desirable to conduct photographing by orthographic projection. However, in a stereoscopic image display device provided with parallax only in a horizontal direction on a screen, when a stereoscopic image is displayed using parallax images photographed by orthographic projection, display photographed by orthographic projection is also obtained in a vertical direction on a screen, which results in strained display. It is desirable that a (virtual) camera can perform orthographic projection in a horizontal direction on a screen and can perform perspective projection in a vertical direction on the screen. However, perspective projection is performed by an actually photographing camera, and either one of perspective projection and orthographic projection is frequently selected in a general purpose rendering engine even in the virtual camera.

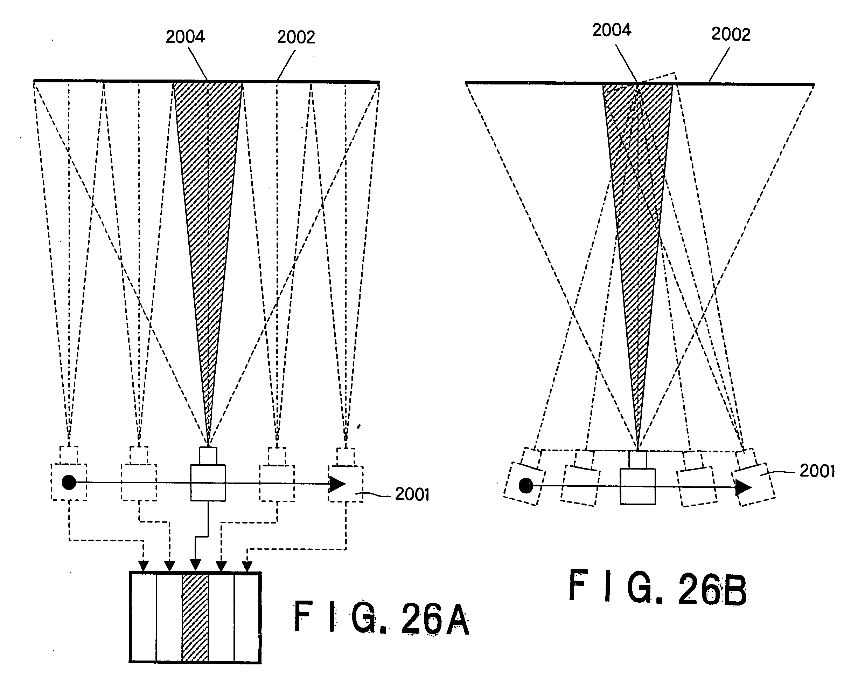

As shown in Figs. 26A and 26B, the example has a feature that a photographing range (an angle of view) of a camera 2001 is made sufficiently narrow, a plurality of partially photographed image pieces are obtained by perspective projection, and a photographed image is obtained by composing respective photographed pieces. This example includes two steps of causing the camera 2001 to be accurately opposed to the photograph reference plane 2002 and performing photographing while moving the camera 2001 in parallel to the photograph reference plane 2002 (Fig. 26A) and fixing a target point 2004 and moving a viewpoint of the camera 2001 (Fig. 26B). In the virtual camera, the photographed image can be obtained by repeating plural geometry conversions and rendering operations.

(Seventh Example)

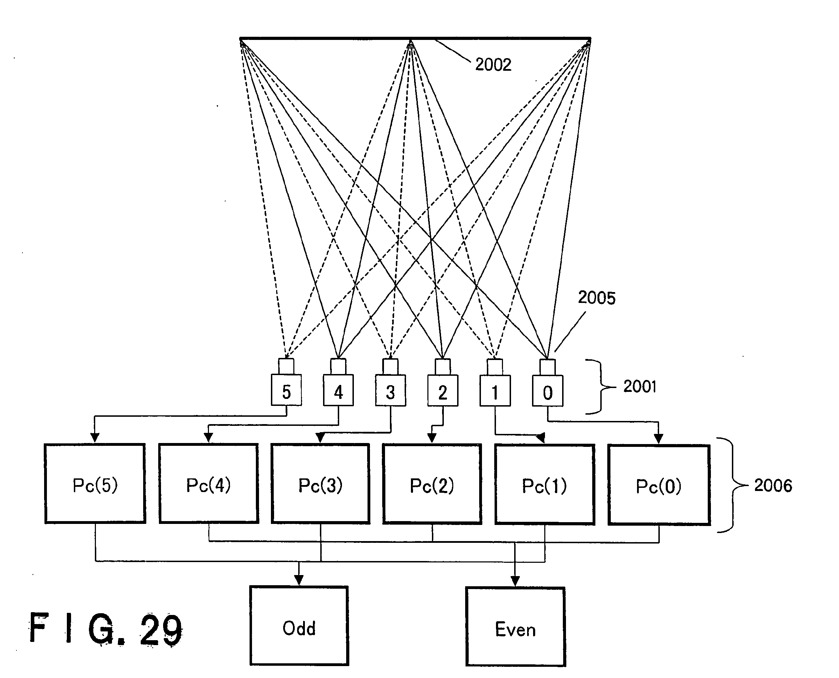

The example relates to a step of the parallax image producing according to the second embodiment. In the relationship between the image display element and the light beam direction restricting element shown in Figs. 44A to 45B, light beam directions regarding odd rows and even rows are arranged in a nested manner. Fig. 29 is a diagram showing arrangement of a camera 2001 for parallax image production as an example corresponding to this constitution. In the example, by setting the number of parallax images to an even number, a set of photographed images can be separated completely. For example, photographed images Pc(0), Pc(2) and Pc(4) constitute a set of parallax images regarding even rows of an image display element, and photographed images Pc(1), Pc(3) and Pc(5) constitute a set of parallax images regarding odd rows of the image display element. Therefore, in the step of producing a stereoscopic image, it is made possible to increase a stereoscopic image producing efficiency to two times by performing parallel processing on the odd rows and the even rows. When a camera is a virtual camera and a ratio of rendering size can be changed to 1: 2, it is made possible to set a photographed image in a vertical direction to 1/2 normal size to reduce a rendering time to 1/2. In Fig. 29, reference numeral 2002 denotes a photograph reference plane and reference numeral 2005 denotes a viewpoint.

As described above, according to the embodiments of the present invention, it is made possible to provide a stereoscopic image producing method and a stereoscopic image display device with an excellent production efficiency.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concepts as defined by the appended claims and their equivalents.

## Claims

**1.** A stereoscopic image producing method comprising:

inputting a plurality of parallax images with pixel data including the three primary color information pieces, which are produced from different viewpoints;
composing some pieces of the three primary color information pieces in each of the parallax images based upon information about arrangement of color pixel dots constituting a pixel of a display screen which displays a two-dimensional image thereon; and
allocating the three primary color information pieces for different ones of the parallax images to the color pixel dots adjacent to each other in a screen horizontal direction on the display screen, wherein
a stereoscopic image including a plurality of different parallax image information pieces in a horizontal direction in a space in which the stereoscopic image is displayed is produced.

**2.** A stereoscopic image producing method comprising:

inputting a plurality of parallax images with pixel data including the three primary color information pieces, which are produced from different viewpoints;
allocating the three primary color information pieces in each of the parallax images to color pixel dots displaying corresponding color information pieces generally in a screen vertical direction of a display screen based upon information about arrangement of the color pixel dots constituting a pixel of the display screen which displays a two-dimensional image thereon; and
allocating the three primary color information pieces for different ones of the parallax images to the color pixel dots adjacent to each other in a screen horizontal direction on the display screen, wherein
a stereoscopic image including a plurality of different parallax image information pieces in a horizontal direction in a space in which the stereoscopic image is displayed is produced.

**3.** A stereoscopic image producing method according to claim 1 or 2, wherein the allocating of the three primary color information pieces is constituted so as to allocate the three primary color information pieces on each parallax image to the color pixel dots on the basis of a ratio of an elemental image width to a dot pitch of the color pixel dots.

**4.** A stereoscopic image producing method according to claim 3, further comprising multiplying the plurality of parallax images in the screen horizontal direction and in a screen vertical direction of the display screen to n times respectively, when n is defined as a natural number of 3 or more.

**5.** A stereoscopic image producing method according to claim 3, further comprising:

multiplying the plurality of parallax images to n times in a horizontal direction, when n is defined as a natural number of 3 or more, m is defined as a regular integer, s is defined as an integer meeting $0 \leq s \leq 2$, and an equation $(n = 3 \times m + s)$ is satisfied,
multiplying the respective parallax images to 3xm times in a vertical direction, and
adding the pixel data, which is obtained by multiplying the respective parallax images to n times in a horizontal direction of the s line(s), for each three lines in a vertical direction.

**6.** A stereoscopic image producing method according to any one of claims 1 to 5, wherein the color pixel dot arrangement is a stripe arrangement.

**7.** A stereoscopic image producing method according to any one of claims 1 to 5, wherein the color pixel dot arrangement is a mosaic arrangement.

**8.** A stereoscopic image producing method according to any one of claims 1 to 7, further comprising producing the plurality of parallax images.

**9.** A stereoscopic image producing method according to claim 8, wherein the plurality of parallax images are produced by orthographic projection.

**10.** A stereoscopic image producing method according to claim 8, wherein the plurality of parallax images are produced by perspective projection.

**11.** A stereoscopic image producing method according to claim 10, wherein producing of a plurality of parallax images includes performing a plurality of geometrical conversions accompanying parallel movement of a target point and a viewpoint at a time of producing each parallax image.

**12.** A stereoscopic image display device comprising:

an image display element on which a plurality of color pixel dots are arranged;
a light beam direction restricting element which is disposed in front of or behind the image display element to restrict a direction of light beam which is emitted from the image display element or entered to the image display element; and
an image display element driving unit which, based upon information about arrangement of the color pixel dots of the image display element, drives the image display element so as to compose some pieces of three primary color information pieces in a plurality of parallax images with pixel data including the three primary color information pieces, which are produced from different viewpoints, and allocate the three primary color information pieces for different ones of the parallax images to the color pixel dots adjacent to each other in a screen horizonta direction on the image display element to display a stereoscopic image including a plurality of different parallax image information pieces in a horizontal direction in a space in which the stereoscopic image is displayed is produced.

**13.** A stereoscopic image display device comprising:

an image display element on which a plurality of color pixel dots are arranged;
a light beam direction restricting element which is disposed in front of or behind the image display element to restrict a direction of light beam which is emitted from the image display element or entered to the image display element; and
an image display element driving unit which, based upon information about arrangement of the color pixel dots of the image display element, drives the image display element so as to allocate three primary color information pieces in a plurality of parallax images with pixel data including the three primary color information pieces, which are produced from different viewpoints, to the color pixel dots displaying corresponding color information piece generally in a screen vertical direction of the display screen and allocate the three primary color information pieces for different ones of the parallax images to the color pixel dots adjacent to each other in a screen horizontal direction on the image display element to display a stereoscopic image including a plurality of different parallax image information pieces in a horizontal direction in a space in which the stereoscopic image is displayed.

**14.** A stereoscopic image display device according to claim 12 or 13, wherein a stereoscopic image including a plurality of different parallax image information pieces in a screen horizontal direction of the image display element is displayed on the basis of a ratio of an elemental image width to a dot pitch of the color pixel dots.

**15.** A stereoscopic image display device according to claim 12 or 13, wherein the image display element is a liquid crystal display panel.

**16.** A stereoscopic image display device according to claim 12 or 13, wherein the light beam direction restricting element is a slit array with a plurality of slit apertures, and

a longitudinal side of each slit aperture is coincident with a screen vertical direction of the image display element.

**17.** A stereoscopic image display device according to claim 12 or 13, wherein the light beam direction restricting element is a cylindrical lens array having a chief line extending in a screen vertical direction of the image display element, and

the light beam direction restricting element is disposed in front of the image display element.

104
Pi (0)
Pi (1)
Pi (2)
Pi (3)
Pi (4)
101
105
COLOR
PIXEL DOT
ARRANGEMENT
INFORMATION
STEREOSCOPIC
IMAGE PRODUCTION
102
103
106
Po

F I G. 1

VIEWPOINT
IMAGE PRODUCTION
201
Pi (0)
104
101
STEREOSCOPIC
IMAGE PRODUCTION
102
COLOR
PIXEL DOT
ARRANGEMENT
INFORMATION
105
103
Po
106


FIG. 2

104
Pi (0)
Pi (1)
Pi (2)
Pi (3)
Pi (4)
101
STEREOSCOPIC IMAGE PRODUCTION
102
COLOR PIXEL DOT ARRANGEMENT INFORMATION
105
103
Po
106
STEREOSCOPIC IMAGE STORAGE
301
STEREOSCOPIC IMAGE RECORD
302

F I G. 3

104
Pi (0)
Pi (1)
Pi (2)
Pi (3)
Pi (4)
101
102
STEREOSCOPIC IMAGE PRODUCTION
103
105
106
Po
STEREOSCOPIC IMAGE DISPLAY
403
401
402

F I G. 4

(0,0)
(0,1)
(X−1,0)
(X−1,Y−1)
(0,Y−1)
(x,y)
Pi
R G B
(1,0)

FIG. 5A

FIG. 5B

START
ACQUIRE COLOR PIXEL DOT ARRANGEMENT INFORMATION
CLEAR BUFFER
PARALLAX IMAGE NUMBER Pi : i=0
FIRST LINE I=0
READ ONE LINE DATA
FILTERRING
WRITE ADOPTED PIXEL DOT DATA IN BUFFER
I=I+1
NO
FINAL LINE?
YES
i=i+1
NO
FINAL VIEWPOINT IMAGE ?
YES
OUTPUT BUFFER (STEREOSCOPIC IMAGE)
END

F I G. 6

0
1
2
1279
1023
0
(0,0)
R,G,B
0
(1,0)
R,G,B
0
(2,0)
R,G,B
0
(1279,0)
R,G,B
0
(0,1)
R,G,B
0
(1,1)
R,G,B
0
(2,1)
R,G,B
0
(1279,1)
R,G,B
0
(0,2)
R,G,B
0
(1,2)
R,G,B
0
(2,2)
R,G,B
0
(1279,2)
R,G,B
0
(0,1023)
R,G,B
0
(1,1023)
R,G,B
0
(2,1023)
R,G,B
0
R,G,B
(1279,1023)
1
(0,0)
R,G,B
1
(1,0)
R,G,B
1
(2,0)
R,G,B
1
(1279,0)
R,G,B
1
(0,1)
R,G,B
1
(1,1)
R,G,B
1
(2,1)
R,G,B
1
(1279,1)
R,G,B
1
(0,2)
R,G,B
1
(1,2)
R,G,B
1
(2,2)
R,G,B
1
(1279,2)
R,G,B
1
(0,1023)
R,G,B
1
(1,1023)
R,G,B
1
(2,1023)
R,G,B
1
R,G,B
(1279,1023)
4
(0,0)
R,G,B
4
(1,0)
R,G,B
4
(2,0)
R,G,B
4
(1279,0)
R,G,B
4
(0,1)
R,G,B
4
(1,1)
R,G,B
4
(2,1)
R,G,B
4
(1279,1)
R,G,B
4
(0,2)
R,G,B
4
(1,2)
R,G,B
4
(2,2)
R,G,B
4
(1279,2)
R,G,B
4
(0,1023)
R,G,B
4
(1,1023)
R,G,B
4
(2,1023)
R,G,B
4
R,G,B
(1279,1023)

FIG. 7

0 1 2 1279
0 1 2 1023
0 (0,0) R
0 (1,0) B
0 R,G,B
0 (0,1) G
0 (1,1) R
0 R,G,B
0 (0,2) B
0 (1,2) G
0 R,G,B
0 (1279,0) R,G,B
0 (1279,1) R,G,B
0 (1279,2) R,G,B
0 (0,1023) R
0 (1,1023) B
0 R,G,B
0 R,G,B
(1279,1023)
1 (0,0) G
1 R,G,B
1 (2,0) R
1 (0,1) B
1 R,G,B
1 (2,1) G
1 (0,2) R
1 R,G,B
1 (2,2) B
1 R,G,B
1 R,G,B
1 R,G,B
1 (0,1023) G
1 R,G,B
1 (2,1023) R
1 R,G,B
(1279,1023)
4 R,G,B
4 (1,0) G
4 R,G,B
4 R,G,B
4 (1,1) B
4 R,G,B
4 R,G,B
4 (1,2) R
4 R,G,B
4 (1279,0) B
4 (1279,1) R
4 (1279,2) G
4 R,G,B
4 (1,1023) G
4 R,G,B
4 B
(1279,1023)


FIG. 8

| | 0 | | | 1 | | | 2 | | | 3 | |
|---|---|---|---|---|---|---|---|---|---|---|---|
| | 0 | 1 | 2 | 3 | 4 | 5 | 6 | 7 | 8 | 9 | 10 |
| 0 | 0 (0,0) R | 1 (0,0) G | 2 (0,0) B | 3 (1,0) R | 4 (1,0) G | 0 (1,0) B | 1 (2,0) R | 2 (2,0) G | 3 (2,0) B | 4 (3,0) R | 0 (3,0) G |
| 1 | 0 (0,1) G | 1 (0,1) B | 2 (0,1) R | 3 (1,1) G | 4 (1,1) B | 0 (1,1) R | 1 (2,1) G | 2 (2,1) B | 3 (2,1) R | 4 (3,1) G | 0 (3,1) B |
| 2 | 0 (0,2) B | 1 (0,2) R | 2 (0,2) G | 3 (1,2) B | 4 (1,2) R | 0 (1,2) G | 1 (2,2) B | 2 (2,2) R | 3 (2,2) G | 4 (3,2) B | 0 (3,2) R |
| 1023 | 0 (0,1023) R | 1 (0,1023) G | 2 (0,1023) B | 3 (1,1023) R | 4 (1,1023) G | 0 (1,1023) B | 1 (2,1023) R | 2 (2,1023) G | 3 (2,1023) B | 4 (3,1023) R | 0 (3,1023) G |

| | 1278 | | | 1279 | | |
|---|---|---|---|---|---|---|
| | 3834 | 3835 | 3836 | 3837 | 3838 | 3839 |
| 0 | 4 (1278, 0) R | 0 (1278, 0) G | 1 (1278, 0) B | 2 (1279, 0) R | 3 (1279, 0) G | 4 (1279, 0) B |
| 1 | 4 (1278, 1) G | 0 (1278, 1) B | 1 (1278, 1) R | 2 (1279, 1) G | 3 (1279, 1) B | 4 (1279, 1) R |
| 2 | 4 (1278, 2) B | 0 (1278, 2) R | 1 (1278, 2) G | 2 (1279, 2) B | 3 (1279, 2) R | 4 (1279, 2) G |
| 1023 | 4 (1278,1023) R | 0 (1278,1023) G | 1 (1278,1023) B | 2 (1279,1023) R | 3 (1279,1023) G | 4 (1279,1023) B |

FIG. 9

START
ACQUIRE COLOR PIXEL DOT ARRANGEMENT INFORMATION
CLEAR BUFFER
PARALLAX IMAGE NUMBER Pi : i=0
l=0 (FIRST LINE)
READ ONE LINE DATA
A
l=l+1
B
NO
FINAL LINE?
YES
i=i+1
NO
FINAL VIEWPOINT IMAGE ?
YES
OUTPUT BUFFER (STEREOSCOPIC IMAGE)
END
A
MAGNIFICATION OF n TIMES IN HORIZONNTAL DIRECTION
k=0 (ROW NUMBER OF LINE BUFFERS)
FILTERING
WRITING ADOPTED PIXEL DOT DATA IN BUFFER
MAGNIFICATION OF n TIMES IN VERTICAL DIRECTION
k=k+1
NO
k=n?
B

FIG. 10B

FIG. 10A

| | 0 | 1 | 2 | ... | 426 |
|---|---|---|---|---|---|
| 0 | 0 (0,0) R,G,B | 0 (1,0) R,G,B | 0 (2,0) R,G,B | | 0 (426,0) R,G,B |
| 1 | 0 (0,1) R,G,B | 0 (1,1) R,G,B | 0 (2,1) R,G,B | ... | 0 (426,1) R,G,B |
| 2 | 0 (0,2) R,G,B | 0 (1,2) R,G,B | 0 (2,2) R,G,B | | 0 (426,2) R,G,B |
| ... | | ... | | | ... |
| 341 | 0 (0,341) R,G,B | 0 (1,341) R,G,B | 0 (2,341) R,G,B | ... | 0 R,G,B (426,841) |

| | 0 | 1 | 2 | ... | 426 |
|---|---|---|---|---|---|
| 0 | 1 (0,0) R,G,B | 1 (1,0) R,G,B | 1 (2,0) R,G,B | | 1 (426,0) R,G,B |
| 1 | 1 (0,1) R,G,B | 1 (1,1) R,G,B | 1 (2,1) R,G,B | ... | 1 (426,1) R,G,B |
| 2 | 1 (0,2) R,G,B | 1 (1,2) R,G,B | 1 (2,2) R,G,B | | 1 (426,2) R,G,B |
| ... | | ... | | | ... |
| 341 | 1 (0,341) R,G,B | 1 (1,341) R,G,B | 1 (2,341) R,G,B | ... | 1 R,G,B (426,841) |

| | 0 | 1 | 2 | ... | 426 |
|---|---|---|---|---|---|
| 0 | 8 (0,0) R,G,B | 8 (1,0) R,G,B | 8 (2,0) R,G,B | | 8 (426,0) R,G,B |
| 1 | 8 (0,1) R,G,B | 8 (1,1) R,G,B | 8 (2,1) R,G,B | ... | 8 (426,1) R,G,B |
| 2 | 8 (0,2) R,G,B | 8 (1,2) R,G,B | 8 (2,2) R,G,B | | 8 (426,2) R,G,B |
| ... | | ... | | | ... |
| 341 | 8 (0,341) R,G,B | 8 (1,341) R,G,B | 8 (2,341) R,G,B | ... | 8 R,G,B (426,841) |

FIG. 11

0
1
2
3
0
1
2
3
0
(0,0)
R,G,B
0
(1,0)
R,G,B
0
(0,1)
R,G,B
0
(1,1)
R,G,B

F I G. 12

| | 0 | | | 1 | | | 2 | | | 3 | |
|---|---|---|---|---|---|---|---|---|---|---|---|
| | 0 | 1 | 2 | 3 | 4 | 5 | 6 | 7 | 8 | 9 | 10 |
| 0 | 0 (0,0) R | 1 (0,0) G | 2 (0,0) B | 3 (0,0) R | 4 (0,0) G | 5 (1,0) B | 6 (0,0) R | 7 (0,0) G | 8 (0,0) B | 0 (1,0) R | 1 (1,0) G |
| 1 | 0 (0,0) G | 1 (0,0) B | 2 (0,0) R | 3 (0,0) G | 4 (0,0) B | 5 (1,0) R | 6 (0,0) G | 7 (0,0) B | 8 (0,0) R | 0 (1,0) G | 1 (1,0) B |
| 2 | 0 (0,0) B | 1 (0,0) R | 2 (0,0) G | 3 (0,0) B | 4 (0,0) R | 5 (1,0) G | 6 (0,0) B | 7 (0,0) R | 8 (0,0) G | 0 (1,0) B | 1 (1,0) R |

| 1277 | | 1278 | | | 1279 | | |
|---|---|---|---|---|---|---|---|
| 3832 | 3833 | 3834 | 3835 | 3836 | 3837 | 3838 | 3839 |
| 7 (425,0) G | 8 (425,0) B | 0 (426,0) R | 1 (426,0) G | 2 (426,0) B | 3 (426,0) R | 4 (426,0) G | 5 (426,0) B |
| 7 (425,0) B | 8 (425,0) R | 0 (426,0) G | 1 (426,0) B | 2 (426,0) R | 3 (426,0) G | 4 (426,0) B | 5 (426,0) R |
| 7 (425,0) R | 8 (425,0) G | 0 (426,0) B | 1 (426,0) R | 2 (426,0) G | 3 (426,0) B | 4 (426,0) R | 5 (426,0) G |

| | | | | | | | | | | | |
|---|---|---|---|---|---|---|---|---|---|---|---|
| 1023 | 0 (0,341) R | 1 (0,341) G | 2 (0,341) B | 3 (0,341) R | 4 (0,341) G | 5 (0,341) B | 6 (0,341) R | 7 (0,341) G | 8 (0,341) B | 0 (1,341) R | 1 (1,341) G |

| | | | | | | | |
|---|---|---|---|---|---|---|---|
| 8 (425 ,341) G | 8 (425 ,341) B | 0 (426 ,341) R | 1 (426 ,341) G | 2 (426 ,341) B | 3 (426 ,341) R | 4 (426 ,341) G | 5 (426 ,341) B |

F I G. 13

START
ACQUIRE COLOR PIXEL DOT ARRANGEMENT INFORMATION
CLEAR BUFFER
PARALLAX IMAGE NUMBER Pi : i=0
l=0 (FIRST LINE)
READ ONE LINE DATA
A
l=l+1
B
NO
FINAL LINE?
YES
i=i+1
NO
FINAL VIEWPOINT IMAGE ?
YES
OUTPUT BUFFER (STEREOSCOPIC IMAGE)
END
A
MAGNIFICATION OF n TIMES IN HORIZONNTAL DIRECTION
k=0 (ROW NUMBER OF LINE BUFFERS)
FILTERING
WRITING ADOPTED PIXEL DOT DATA IN BUFFER
k=k+1
NO
k=3m?
3 LINES DEVELOPMENTN IN VERTICAL DIRECTION
YES
γ-1
1/2
LINE MEMORY
+
γ
LINE INTERPOLATION
k=0 (ROW NUMBER OF LINE BUFFERS)
FILTERING
WRITING ADOPTED PIXEL DOT DATA IN BUFFER
k=k+1
NO
k=s?
ADDITION OF s LINES IN VERTICAL DIRECTION
YES
B

FIG. 14A

FIG. 14B

×4
×4
0
1
2
3
4
5
6
7
×3
×3
1/2
1/2
1/2
1/2
0
1
2
3
4
5
6
7
8
R,G,B

FIG. 15

| REDUCTION FACTOR | NUMBER OF HORIZONTAL PIXELS | NUMBER OF VERTICAL PIXELS | VERTICAL LINE DEVELOPING METHOD | ADOPTION FACTOR | INTERPOLATION FACTOR |
|---|---|---|---|---|---|
| 1 | 1280 | 1024 | — | 11% | 0% |
| 2 | 640 | 512 | × 2 | 22% | 0% |
| 3 | 426 | 341 | × RGB | 100% | 0% |
| 4 | 320 | 256 | × RGB+1 | 133% | 44% |
| 5 | 256 | 204 | × RGB+2 | 167% | 64% |
| 6 | 213 | 170 | × 2 (RGB) | 200% | 75% |
| 7 | 182 | 146 | × 2 (RGB) +1 | 233% | 82% |
| 8 | 160 | 128 | × 2 (RGB) +2 | 267% | 86% |
| 9 | 142 | 113 | × 3 (RGB) | 300% | 89% |
| 10 | 128 | 102 | × 3 (RGB) +1 | 333% | 91% |

F I G. 16

ADOPTION FACTOR
1.2
1
0.8
0.6
0.4
0.2
0
1
2
3
4
5
6
7
8
9
10
REDUCTION FACTOR
NUMBER OF PARALLAXES
6
9
15
21
27

F I G. 17

INTERPOLATION FACTOR
1
0.8
0.6
0.4
0.2
0
1
2
3
4
5
6
7
8
9
10
REDUCTION FACTOR
NUMBER OF PARALLAXES
6
9
15
21
27

FIG. 18

2004
2005
2002
2001

FIG. 19

2002
2004
3606
2005
2001
2006
0
1
2
3
4
Pc(0)
Pc(1)
Pc(2)
Pc(3)
Pc(4)

FIG. 20

2002
3606
2005
2001
2201
2004

FIG. 21

2004
2002
2302
2005
2001
2301

FIG. 22

Pi (0)
Pi (4)
2303
3601
3003
3004
2002
2004
3606
2005
2302
Pc (4)
Pc (3)
Pc (2)
2301
2001
Pc (1)
Pc (0)


F I G. 23

3601
3004
3003
3606
2005

F I G. 24

Pi (4)
Pi (0)
2002
2004
2005
2302
2303
3601
3003
3004
3606
2001
2301
Pc (0)
Pc (1)
Pc (2)
Pc (3)
Pc (4)

F I G. 25

2002
2004
2001
2002
2004
2001

FIG. 26A

FIG. 26B

3602
2303
0 1 2 3 4
3601
0 1 2 3 4
0 1 2 3 4
0 1 2 3 4
3003
3606
4 3 2 1 0
5 4 3 2 1
6 5 4 3 2
8 7 6 5 4
2601

FIG. 27

3003
3606
2701
2601
8 6 4
4 2 0

FIG. 28

2002
2005
2001
2006
0
1
2
3
4
5
Pc(0)
Pc(1)
Pc(2)
Pc(3)
Pc(4)
Pc(5)
Even
Odd

FIG. 29

401
402

FIG. 30

3004
3002
3003
3002
3001
3003
3005
3003
3001
3005
3004
3001
3005

FIG. 31A FIG. 31B FIG. 31C FIG. 31D FIG. 31E

0
1
i
1279
← PIXEL COLUMN NUMBER I
0 1 2 3 4 5
3837 3838 3839
← DOT COLUMN NUMBER L
R G B R G B
(0,0) (1,0)
(0,1) (1,1)
(0,2) (1,2)
(1279,0)
(1279,1)
(1279,2)
3i 3i+1 3i+2
(i,j)
(0,1023) (1,1023)
(1279,1023)
0
1
2
j
1023
← PIXEL ROW NUMBER J

FIG. 32

0
1
i
1279
← PIXEL COLUMN NUMBER I
0 1 2 3 4 5
3837 3838 3839
← DOT COLUMN NUMBER L
0
1
2
j
1023
↑
PIXEL ROW NUMBER J
R R R R R R
(0,0)
(1,0)
G G G G G G
(0,1)
(1,1)
B B B B B B
(0,2)
(1,2)
R R R
(1279,0)
G G G
(1279,1)
B B B
(1279,2)
3i 3i+1 3i+2
(i,j)
R R R R R R
(0,1023)
(1,1023)
R R R
(1279,1023)


FIG. 33

0 1 i 1279
PIXEL COLUMN NUMBER I
0 1 2 3 4 5
3837 3838 3839
DOT COLUMN NUMBER L
0 1 2 j 1023
PIXEL ROW NUMBER J
R G B R G B
G B R G B R
B R G B R G
(0,0) (1,0) (0,1) (1,1) (0,2) (1,2)
(1279,0) (1279,1) (1279,2)
3i 3i+1 3i+2
(i,j)
(0,1023) (1,1023) (1279,1023)

FIG. 34

PIXEL COLUMN NUMBER I
DOT COLUMN NUMBER L
PIXEL ROW NUMBER J
0
1
1279
0 1 2 3 4 5
3837 3838 3839
0
1
2
j
1023
R G B R G B
B R G B R G
(0,0)
(1,0)
(1,1)
(0,1)
(0,2)
(1,2)
(1,3)
(0,3)
(0,1023)
(1,1023)
(1279,0)
(1279,1)
(1279,2)
(1279,3)
(1279,1023)


FIG. 35

FIG. 36C

FIG. 36B

FIG. 36A

3602
0 1 2 3 4
0 1 2 3 4
0 1 2 3 4
0 1 2 3 4
3601
3003
3004
3606
2005
(4)
(3)
(2)
(1)
(0)
Pv(4)
Pv(3)
Pv(2)
Pv(1)
Pv(0)

F I G. 37

3606
3004
3606
2005
(0)
(1)
(2)
(3)
(4)
3601
3004
Pv(0)
Pv(1)
Pv(2)
Pv(3)
Pv(4)

FIG. 38A

FIG. 38B

3005
3004
3003
3601
3606
2005
(4)
(3)
(2)
(1)
(0)
Pv(4)
Pv(3)
Pv(2)
Pv(1)
Pv(0)

F I G. 39

Px
3601
2004
g
3003
P
g'
P'x
L
3606
Wv
2005


F I G. 40

REFRACTIVE INDEX : n
REFRACTIVE INDEX : n
3004
REFRACTIVE INDEX : 1
Px
P
P
g
L
Wv
θ
φ
θ'
φ'

F I G. 41

3602
3601
3004
3003
0 1 2 3 4 0 1 2 3 4
0 1 2 3 4 0 1 2 3 4

FIG. 42

3601
3602
3003
3004

FIG. 43

(a)
(b)
(c)
3004
3003
ODD NUMBER
EVEN NUMBER

FIG. 44A

FIG. 44B

| | | | | | | | |
|---|---|---|---|---|---|---|---|
| ODD NUMBER | 1 | 3 | 5 | 1 | 3 | 5 | 1 |
| EVEN NUMBER | 0 | 2 | 4 | 0 | 2 | 4 | 0 |
| | 5 | 1 | 3 | 5 | 1 | 3 | 5 |
| | 4 | 0 | 2 | 4 | 0 | 2 | 4 |
| | 3 | 5 | 1 | 3 | 5 | 1 | 3 |
| | 2 | 4 | 0 | 2 | 4 | 0 | 2 |

FIG. 45A

3004
3003
1 3 5 1 3 5 1
0 2 4 0 2 4 0
5 1 3 5 1 3 5
4 0 2 4 0 2 4
3 5 1 3 5 1 3
2 4 0 2 4 0 2

FIG. 45B

European Patent Office

# EUROPEAN SEARCH REPORT

Application Number
EP 04 25 6061

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 719 620 A (ALLIO ET AL) 17 February 1998 (1998-02-17) | 1,3,6-8, 10-12, 14-17 | H04N13/00 |
| | * column 1, line 42 - column 2, line 15 * | | |
| | * column 4, line 43 - column 5, line 30 * | | |
| | * column 9, line 5 - column 11, line 49 * | | |
| A | * column 12, line 32 - line 63 * | 2,4,5,13 | |
| | * column 13, line 6 - line 27 * | | |
| | * column 19, line 41 - line 64 * | | |
| | * column 22, line 1 - line 16 * | | |
| | * figures 25a,4-24,26-28 * | | |
| | ----- | | |
| X | US 5 875 055 A (MORISHIMA ET AL) 23 February 1999 (1999-02-23) | 1,6,12, 15,16 | |
| | * column 1, line 7 - line 12 * | | |
| | * column 1, line 66 - column 2, line 32 * | | |
| A | * column 3, line 23 - line 65 * | 2-5,13 | |
| | * column 5, line 19 - column 6, line 20 * | | |
| | * column 6, line 61 - column 8, line 67 * | | |
| | * figures 1-10 * | | |
| | ----- | | TECHNICAL FIELDS SEARCHED (Int.Cl.7) |
| A | US 2003/011884 A1 (VAN BERKEL) 16 January 2003 (2003-01-16) | 1-3,6, 12-15,17 | H04N |
| | * paragraphs [0001] - [0004] * | | |
| | * paragraph [0013] - paragraph [0016] * | | |
| | * paragraph [0037] - paragraph [0043] * | | |
| | * figures 1-6 * | | |
| | ----- | | |
| A | US 5 808 599 A (ALLIO ET AL) 15 September 1998 (1998-09-15) | 1-3,6, 12-15,17 | |
| | * column 1, line 33 - column 2, line 20 * | | |
| | * column 2, line 52 - column 4, line 51 * | | |
| | * figures 1-3 * | | |
| | ----- | | |

The present search report has been drawn up for all claims

| Place of search | Date of completion of the search | Examiner |
|---|---|---|
| Munich | 26 January 2005 | Fragua, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1 EPO FORM 1503 03.82 (P04C01)

## ANNEX TO THE EUROPEAN SEARCH REPORT ON EUROPEAN PATENT APPLICATION NO. EP 04 25 6061

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2005

| Patent document cited in search report | | Publication date | Patent family member(s) | | | Publication date |
|---|---|---|---|---|---|---|
| US 5719620 | A | 17-02-1998 | FR | 2705006 | A1 | 10-11-1994 |
| | | | FR | 2705007 | A1 | 10-11-1994 |
| | | | FR | 2705009 | A1 | 10-11-1994 |
| | | | CA | 2161262 | A1 | 10-11-1994 |
| | | | DE | 69416671 | D1 | 01-04-1999 |
| | | | DE | 69416671 | T2 | 30-09-1999 |
| | | | DE | 69425912 | D1 | 19-10-2000 |
| | | | DE | 69425912 | T2 | 19-04-2001 |
| | | | DE | 69428611 | D1 | 15-11-2001 |
| | | | DE | 69428611 | T2 | 08-08-2002 |
| | | | EP | 0697160 | A1 | 21-02-1996 |
| | | | EP | 0876065 | A1 | 04-11-1998 |
| | | | EP | 0876066 | A1 | 04-11-1998 |
| | | | ES | 2131193 | T3 | 16-07-1999 |
| | | | ES | 2165644 | T3 | 16-03-2002 |
| | | | WO | 9426071 | A1 | 10-11-1994 |
| | | | JP | 8509852 | T | 15-10-1996 |
| | | | US | 6049352 | A | 11-04-2000 |
| | | | US | 5946027 | A | 31-08-1999 |
| US 5875055 | A | 23-02-1999 | JP | 9015532 | A | 17-01-1997 |
| US 2003011884 | A1 | 16-01-2003 | EP | 1413149 | A1 | 28-04-2004 |
| | | | WO | 03007620 | A1 | 23-01-2003 |
| | | | JP | 2004534972 | T | 18-11-2004 |
| | | | TW | 556138 | B | 01-10-2003 |
| US 5808599 | A | 15-09-1998 | FR | 2705008 | A1 | 10-11-1994 |
| | | | CA | 2161260 | A1 | 10-11-1994 |
| | | | DE | 69413532 | D1 | 29-10-1998 |
| | | | DE | 69413532 | T2 | 06-05-1999 |
| | | | EP | 0697161 | A1 | 21-02-1996 |
| | | | ES | 2123786 | T3 | 16-01-1999 |
| | | | WO | 9426072 | A1 | 10-11-1994 |
| | | | JP | 8509851 | T | 15-10-1996 |
| | | | US | 5936607 | A | 10-08-1999 |

EPO FORM P0459

For more details about this annex : see Official Journal of the European Patent Office, No. 12/82